# EUROPEAN PATENT SPECIFICATION

(11) **EP 4 239 510 B1**
(45) Date of publication and mention of the grant of the patent: **01.05.2024**
(21) Application number: 23158715.5
(22) Date of filing: 27.02.2023
(51) Int. Cl.: G06F 21/64, H04L 9/00, H04L 9/32, H04L 9/12

(54) **COLLABORATIVE VERIFICATION OF CERTIFICATION COMPUTING SYSTEM BASED ON CONSISTENCY PROOFS**
KOLLABORATIVE ÜBERPRÜFUNG EINES ZERTIFIZIERUNGSRECHNERSYSTEMS AUF DER BASIS VON KONSISTENZNACHWEISEN
VÉRIFICATION COLLABORATIVE D'UN SYSTÈME INFORMATIQUE DE CERTIFICATION BASÉE SUR DES PREUVES DE COHÉRENCE

(30) Priority: 01.03.2022 IT 202200003839
(43) Date of publication of application: 06.09.2023
(73) Proprietor: Traent S.r.l., 20144 Milano (IT)
(72) Inventor: SEVERINO, Fabio, I-56123 PISA (IT); FELICIOLI, Claudio, I-56123 PISA (IT); CANCIANI, Andrea, I-56127 PISA (IT)
(74) Representative: Pezzoli, Ennio

(56) References cited:
- EP-A1- 3 665 858
- EP-B1- 3 665 858
- US-A1- 2021 255 993
- US-A1- 2021 377 037
- REYZIN LEONID ET AL: "Improving Authenticated Dynamic Dictionaries, with Applications to Cryptocurrencies", 23 December 2017 (2017-12-23), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 376 - 392, XP047459174, ISBN: 978-3-540-74549-5 [retrieved on 2017-12-23] * Sections 1, 1.1, 2, 3; page 376 - page 381 *

## Description

### Technical field

The present disclosure relates to the information technology field. More specifically, this disclosure relates to the storing of data.

### Background

The background of the present disclosure is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present disclosure.

Storing of data is a commonplace activity in most computing systems (for example, for their preservation, outputting, further processing and so on). In several situations, the storing of data is subject to specific requirements.

Particularly, it may be required that the storing of data is persistent; this means that it should not be possible to alter the data once they have been stored. Therefore, any updates of the data should preserve all previous versions of the same data; this requirement may be fulfilled in a general way by organizing the data in a sequence of (data) blocks and then restricting the writing by allowing only the append of each new block to an end of the sequence. For this purpose, it may be important that the data being stored is tamper-evident. This means that any alteration of the data after their storing should be detectable in a relatively easy way. All of the above allows making the data non-repudiable, so that their validity may not be denied. This is important in situations wherein integrity and origin of the data have to be trusted by different subj ects.

Moreover, it may be required that access to the data is controlled. This means that access to the data should be restricted selectively to specific subjects only. All of the above allows avoiding disclosure of the data to unauthorized subjects that are not entitled to know them. This is important in situations wherein the data have not to be disseminated publicly.

For this purpose, a central entity that is generally trusted by all the involved subjects may be delegated to store the data. The central entity guarantees that the data are persistent and that they may be accessed only by authorized subjects. However, this requires uploading all the data to be stored to a (central) server of the central entity. The uploading of the data may involve an overloading of a network being used to communicate with the central server (especially in case of uploading of large amount of data). All of the above may involve a corresponding performance degradation. In any case, the uploading of the data to the central server may be unfeasible; a typical example is when the data are subject to strict confidentiality requirements.

Alternatively, the data may be stored into a blockchain. The blockchain is a distributed ledger that stores data into a sequence of blocks in chronological order, linked to each other via corresponding hash values. The blockchain is distributed throughout peer nodes of a corresponding network, which validate its content according to a consensus schema that determines the valid version of the blockchain (with no centralized version of the blockchain that exists and no node that is more trusted than any other node is). In a consensus schema based on a proof of work, a complex mathematical problem has to be solved by determining a nonce to be added to each block that provides a specific property of its hash value. Therefore, no block may be altered without re-determining the nonces of this block and of all the next blocks in the blockchain; however, the difficulty of the mathematical problem required to determine the nonces makes it substantially impossible to alter the blockchain (unless a majority of the processing power of the whole network is acquired). Particularly, in a blockchain of permissionless (or public) type, no restriction exists on its access. Conversely, in a blockchain of permissioned (or private) type, the blockchain may not be joined unless invited by an owner thereof. The owner may then limit access to the (private) blockchain to authorized subjects only.

However, the blockchain requires a relatively large network to ensure an acceptable degree of reliability (especially when it is public). The solutions of the mathematical problem required for appending new blocks involve a high consumption of computational resources and then of energy. The consensus schema requires all the nodes to consume networking, computational and storage resources for every block that is added to the blockchain; this may be quite ineffective for nodes that are interested only in a relatively small amount of the data contained in the blockchain. Particularly, in case of a private blockchain (to control access to the data), persistency of the data may not be verified in case they are provided outside the corresponding network or persistency of pre-existing data may not be verified by new subjects invited to join the blockchain later on.

Document "Improving Authenticated Dynamic Dictionaries, with Applications to Cryptocurrencies" by L. Reyzin et al., 21st International Conference on Financial Cryptography and Data Security, April 2017 describes an authenticated dynamic dictionary for verifying transactions performed on a blockchain implementing a cryptocurrency. Miners hold the blockchain and an entire dynamic dictionary (maintaining balances of all accounts of the blockchain) whereas verifiers hold a digest of the dynamic dictionary. Each miner performing a block of transactions on the blockchain (and corresponding updates of the dynamic dictionary involving insertion of accounts, update of balances and/or deletion of accounts) publishes the transactions, a proof of the corresponding updates of the dynamic dictionary and a new digest of the dynamic dictionary. Each verifier uses the proof to verify the updates of the dynamic dictionary with respect to its digest and that the new digest is correct. However, the dynamic dictionary that is verified is not a persistent data structure and the miners need to publish the updates of the dynamic dictionary to allow their verification; moreover, a large number of verifiers is needed for the health of the cryptocurrency (since no entity is trusted in the corresponding network of the blockchain having no central authority), with them that only verify the updates of the dynamic dictionary corresponding to the transactions after they have already been performed by the miners.

Additional prior art documents in the technical field are US 2021/255993 A1 and US 2021/377037 A1.

### Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present disclosure is based on the idea of making data tamper-evident according to corresponding certified consistency proofs.

Particularly, an aspect provides a method performed by each of a plurality of storage computing systems for storing tamper-evident data in data structures (each containing a persistent sequence of data blocks). An appending request, comprising an indication of a new digest of a new version of a corresponding data structure with a new data block appended thereto and a consistency proof of the new version with respect to the current version of the data structure, is submitted to a certification computing system. The new data block is appended to the data structure in response to an appending receipt being returned by the certification computing system certifying a positive result of a verification of the appending request. The certification computing system is verified according to the verification of validation messages distributed by the storage computing systems (each comprising the appending receipts of at least one of their data structures).

A further aspect provides a software program for implementing the method.

A further aspect provides a storage computing system for performing the method.

A further aspect provides a computing infrastructure comprising a plurality of storage computing systems.

More specifically, one or more aspects of the present disclosure are set out in the independent claims and advantageous features thereof are set out in the dependent claims, with the wording of all the claims that is herein incorporated verbatim by reference (with any advantageous feature provided with reference to any specific aspect that applies *mutatis mutandis* to every other aspect).

### Brief description of the drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes, like value, content and representation). Particularly:
FIG.1A-FIG.1D show the general principles of the solution according to an embodiment of the present disclosure,
FIG.2 shows a schematic block diagram of a computing infrastructure that may be used to implement the solution according to an embodiment of the present disclosure,
FIG.3 shows the main software components that may be used to implement the solution according to an embodiment of the present disclosure, and
FIG.4A-FIG.4D show an activity diagram describing the flow of activities relating to an implementation of the solution according to an embodiment of the present disclosure.

### Detailed description

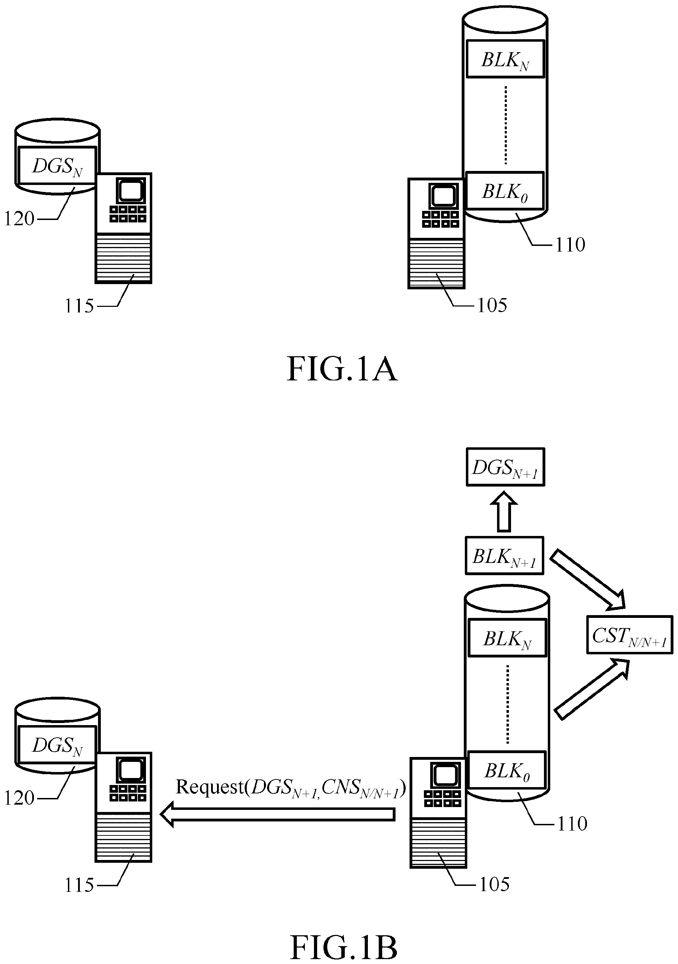

With reference now to FIG. 1A-FIG.1D, the general principles are shown of the solution according to an embodiment of the present disclosure.

Starting from FIG.1A, one or more storage computing systems, or simply storage nodes 105 (only one shown in the figure) store generic data (for example, logs, documents, transactions, chats and so on). The data are stored into one or more data structures, or simply ledgers 110 (only one shown in the figure). Each ledger 110 stores the corresponding data into (data) blocks *BLKᵢ* (with *i*=*0...N*)*.* The blocks *BLKᵢ* are arranged in a (chronological) succession defined by their appending to the ledger 110 (from block *BLK₀* to block *BLK_{N}* in the example at issue). For this purpose, the blocks *BLKᵢ* may only be added in sequence by appending them to an end of the ledger 110. Therefore, the ledger 110 accumulates the data that are never removed from the ledger 110 once they have been added thereto (with any updates of the data that preserve all previous versions of the same data). A certification computing system, or simply certification server 115 controls the storing of the data in the corresponding ledgers 110.

In the solution according to an embodiment of the present disclosure, for this purpose the certification server 115 stores corresponding (current) digests 120 of current versions of the ledgers 110, only one shown in the figure with value *DGS_{N}* for the single ledger 110 at issue. In general, the digest of each ledger 110 is a value representative of the ledger 110 that is derived from its content (from the blocks *BLK₀*-*BLK_{N}* for the current digest *DGS_{N}*). For example, the digest is a hash value that is calculated by applying a cryptographic hash function to the content of the ledger 110. The cryptographic hash function is a hash function that maps data of arbitrary size to hash values of fixed-size. In addition, the cryptographic hash function is deterministic, *i.e.,* it always produces the same hash value for the same input value (with a low risk of collision given by the same hash value for different input values and with an avalanche effect producing extensive changes of the hash value for small changes of the input data); the cryptographic hash function is also non-invertible, *i.e*., with the hash value that may be calculated from the input data in a relatively fast way but with the input data that is practically infeasible to be calculated from the hash value (because of a computational complexity involving a time complexity longer than a relevance period of the input data, for example, not of polynomial time).

Moving to FIG.1B, the storage node 105 needs to add a (new) block *BLK*_{*N*+*1*} to the ledger 110 (to an end of its succession). For this purpose, the storage node 105 calculates the value of a (new) digest *DGS*_{*N*+*1*} of a new version of the ledger 110 that would be obtained by appending the new block *BLK*_{*N*+*1*} thereto (*i.e*., from the blocks *BLK₀-BLK*_{*N*+*1*})*.* Moreover, the storage node 105 determines a consistency proof *CNS*_{*N*/*N*+*1*} of the new version with respect to the current version of the ledger 110. In general, the consistency proof provides information that allows verifying that the new version and the current version of the ledger 110 are consistent (without the need of actually knowing them); this means that the new version contains the current version without any alteration and that the new version has been obtained by extending the current version (appending data to the end thereof). The storage node 105 then submits an appending request for the new block *BLK*_{*N*+*1*} to the certification server 115; the appending request comprises an indication of the new digest *DGS*_{*N*+*1*} (for example, its value) and the consistency proof *CNS*_{*N*/*N*+}*₁.*

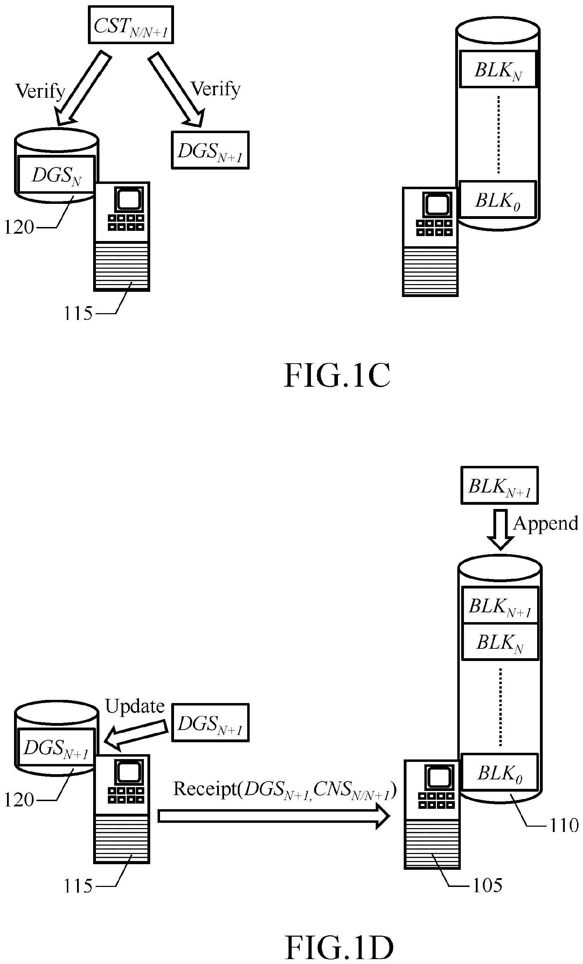

Moving to FIG.1C, in response thereto the certification server 115 verifies the appending request. Particularly, this comprises verifying the consistency proof *CNS*_{*N*/*N*+*1*} (extracted from the appending request) according to the value *DGS_{N}* of the current digest 120 stored therein. For this purpose, the certification server 115 uses the consistency proof *CNS*_{*N*/*N*+*1*} to calculate the current digest and then it verifies whether the current digest so obtained matches its expected value *DGS_{N}.* Moreover, the certification server 115 obtains the new digest *DGS*_{*N*+*1*} satisfying the consistency proof *CNS*_{*N*/*N*+*1*}; for example, the certification server 115 uses the consistency proof *CNS*_{*N*/*N*+*1*} to calculate the new digest and then it verifies whether the new digest so obtained matches its expected value *DGS*_{*N*+*1*} extracted from the appending request.

Moving to FIG.1D, if both verifications provide a positive result (meaning that the new version contains the current version without any alteration and that the new version has been obtained by appending the new block to the current version, respectively), the certification server 115 authorizes the corresponding writing of the ledger 110. For this purpose, the certification server 115 updates the current digest 120 of the ledger 110 to the value of the new digest *DGS*_{*N*+}*₁.* At the same time, the certification server 115 returns an appending receipt to the storage node 105 in response to the appending request. The appending receipt is certified by the certification sever 115 (for example, by a corresponding digital signature); the appending receipt certifies the positive result of the verification of the appending request (meaning that the new version of the ledger 110 providing the value of the new digest *DGS*_{*N*+*1*} is consistent with the current version of the ledger 110 providing the value of the current digest *DGS_{N}*)*.* The storage node 105 may now append the new block *BLK*_{*N*+*1*} to the ledger 110, which actually generates its new version; the new block *BLK*_{*N*+*1*} is appended to the ledger 110 in association with its appending receipt (certifying the consistency of the new version of the ledger 110).

The above-mentioned solution makes the persistency of each ledger 110 tamper-evident, since it allows verifying that the data of the ledger 110 have never been altered after their storing therein. For example, in this way it is possible to have multiple copies of the ledger 110 being mirrored onto corresponding storage nodes 105 that may write them independently, to audit the persistency of the ledger 110, to share the ledger 110 ensuring its consistency, to verify a correctness of operation of the certification server 115 and so.

The desired result is achieved without any need of exposing the data to the certification server 115. Particularly, the proposed solution only needs transmitting the appending requests (whose size is independent of the size of the data to be appended to the ledger 110) to the certification server 115. This substantially reduces any overloading of a network being used to communicate with the certification server 115, with a beneficial effect on performance. Moreover, the proposed solution avoids disseminating the data. This is important when access to the data has to be controlled by restricting it selectively (especially when the data are subj ect to strict confidentiality requirements).

The proposed solution is quite simple, thereby involving a relatively low consumption of networking, computational and storage resources (especially with respect to the use of a blockchain for storing the data).

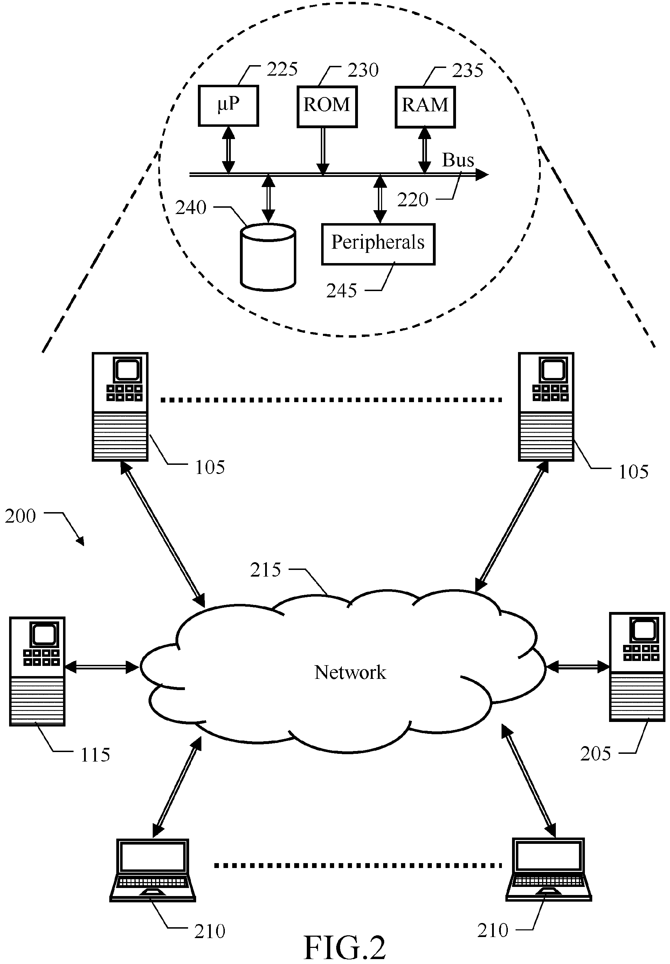

With reference now to FIG.2, a schematic block diagram is shown of a computing infrastructure 200 that may be used to implement the solution according to an embodiment of the present disclosure.

The (computing) infrastructure 200 comprises the above-mentioned storage nodes 105 and certification server 115. The certification server 115 is trusted to its operation of certifying the appending receipts. In general terms, this means that the certification server 115 is relied upon to the verification of the consistency proofs of the appending requests, so that the appending receipts being certified by the certification server 115 ensures that the corresponding blocks have been appended to each ledger preserving its previous version (and then that the ledger is persistent). The correctness of the verification of the consistency proofs of the appending requests by the certification server 115 (known trust) is provided independently of the appending receipts (expected information), for example, as a result of a collaborative verification of operation of the certification server 115 by the storage nodes 105 (as described in the following).

Moreover, the infrastructure 200 comprises a Public Key Infrastructure (PKI) server computing system, or simply PKI server 205 (or more) of a Certification Authority (CA) that implements a PKI service. The PKI service leverages an asymmetric encryption technique involving the use of pairs of keys, each formed by a (non-confidential) public key and a (confidential) private key that are generated so that it is computationally unfeasible to obtain the private key from the public key. Each of the keys (either the public one or the private one) is used to encrypt information in original form (plaintext) into an unintelligible form (cyphertext); the other key is used to decrypt the (encrypted) information to restore its original form. The certification authority guarantees an identity of subjects associated with the pairs of public/private keys (the storage nodes 105 and the certification server 115 in the application at issue) by means of digital certificates thereof. Each digital certificate contains identification information of the subject, its public key, and a name of the certification authority. The digital certificate is digitally signed by the certification authority with its private key (with the identity of the certification authority that is guaranteed by an upper-level certification authority, up to a main certification authority being generally trusted). The infrastructure 200 further comprises a plurality of client computing systems, or simply clients 210. The clients 210 are used to access the data stored in the storage nodes 105 by (authorized) users thereof and/or to verify the consistency of the data stored in the storage nodes 105 by (entrusted) auditors. The storage nodes 105, the certification server 115, the PKI server 205 and the clients 210 communicate among them over a (telecommunication) network 215, for example, of global type based on the Internet.

Each of the above-described computing systems (storage nodes 105, certification server 115, PKI server 205 and clients 210) comprises several units that are connected among them through a bus structure 220 at one or more levels (with an architecture that is suitably scaled according to the type of the computing system 105,115,205,210). Particularly, a microprocessor (µP) 225, or more, provides a logic capability of the computing system 105,115,205,210; a non-volatile memory (ROM) 230 stores basic code for a bootstrap of the computing system 105,115,205,210 and a volatile memory (RAM) 235 is used as a working memory by the microprocessor 225. The computing system 105,115,205,210 is provided with a mass-memory 240 for storing programs and data (for example, storage devices of a data center wherein each node/server 105,115,205 is implemented and a Solid-State Disk, or SSD, for each client 210). Moreover, the computing system 105,115,205,210 comprises a number of controllers for peripherals, or Input/Output (I/O) units, 245; for example, the peripherals 245 of each node/server 105,115,205 comprise a network adapter for plugging the node/server 105,115,205 into the corresponding data center and then connecting it to a console of the data center for its control (for example, a personal computer, also provided with a drive for reading/writing removable storage units, such as of USB type) and to a switch/router sub-system of the data center for its communication with the network 215, whereas the peripherals 245 of each client 210 comprise a keyboard, a mouse, a monitor, a network adapter for connecting to the network 215 and a drive for reading/writing removable storage units (such as of USB type).

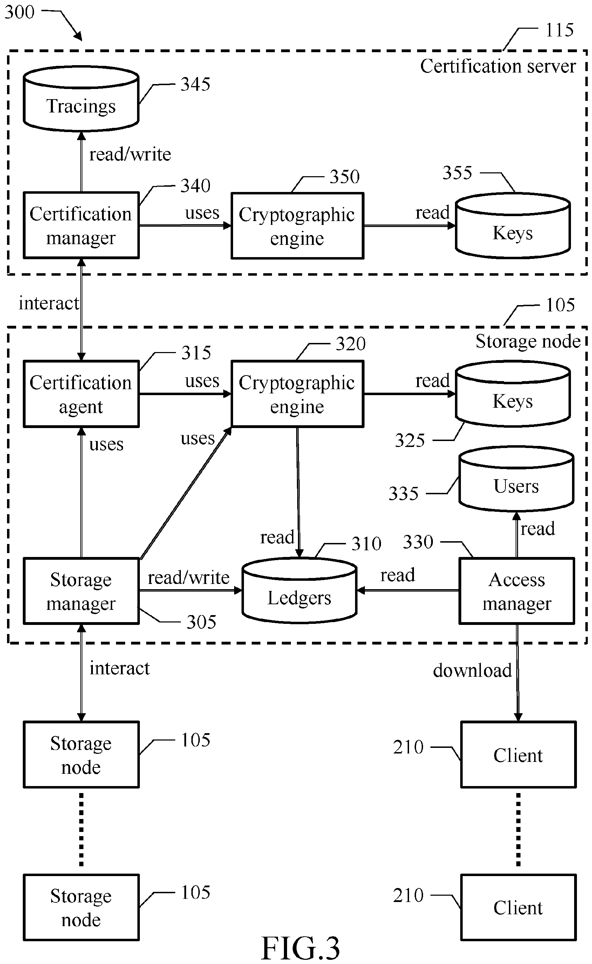

With reference now to FIG.3, the main software components are shown that may be used to implement the solution according to an embodiment of the present disclosure.

Particularly, all the software components (programs and data) are denoted as a whole with the reference 300. The software components are typically stored in the mass memory and loaded (at least partially) into the working memory of each computing system when the programs are running, together with an operating system and other application programs not directly relevant to the solution of the present disclosure (thus omitted in the figure for the sake of simplicity). The programs are initially installed into the mass memory, for example, from removable storage units or from the network. In this respect, each program may be a module, segment or portion of code, which comprises one or more executable instructions for implementing the specified logical function.

Starting from each storage node 105 (only one shown in the figure) it comprises the following components. A storage manager 305 manages the storing of data. The storage manager 305 reads/writes a ledger repository 310 that contains information relating to (local) ledgers being managed by the storage node 105 and to (remote) ledgers, or at least part thereof, being not managed by the storage node 105. For example, the ledger repository 310 has an entry for each (local/remote) ledger. In case of a local ledger, the entry stores a header comprising a (unique) identifier of the (local) ledger, an author list of one or more author (storage) nodes 105 being authorized to write the ledger, and a peer list of possible other peer (storage) nodes 105 on which the ledger is mirrored (identified according to their digital certificates). The author list also indicates the author nodes 105 that are authorized to update the author/peer lists (with each update performed by an author node 105 that is distributed to the other peer nodes 105 and to the certification server 115 via a corresponding update request being digitally signed by the author node 105, so as to cause each of them to verify the update request (by verifying its digital signature and that the author node 105 is authorized to update the author/peer list according to the current version of the author list) and to update the author/peer list accordingly in response to a positive verification of the update request). The entry further stores the ledger comprising a record list formed by a (chronological) succession of one or more records. Each record contains a (data) block and a corresponding creation/appending receipt, which in turn contains a current version of the digest of the ledger (current digest) up to this block. Particularly, a first record contains a null block and a creation receipt being provided by the certification server 115 that certifies the creation of the ledger (as described in the following); each following record instead contains a block being appended to the ledger and an appending receipt being provided by the certification server 115 that certifies the appending of the block (as described in the following). Instead, in case of a remote ledger the entry only stores the identifier of the ledger and a receipt list formed by a (chronological) succession of its creation/appending receipts.

The storage manager 305 interacts with the other storage nodes 105. The storage manager 305 uses a certification agent 315. The certification agent 315 interacts with the certification server 115 for obtaining the creation/appending receipts. A cryptographic engine 320 is used by the certification agent 315 and by the storage manager 305. The cryptographic engine 320 performs cryptographic operations based on the PKI service (interacting with the PKI server, not shown in the figure). The cryptographic engine 320 reads the ledger repository 310 and a key repository 325. The key repository 325 stores (in a protected way) the private key of the storage node 105 and its digital certificate being issued by the PKI server. An access manager 330 manages access to the data stored in the storage node 105. The access manager 330 reads the ledger repository 310 and a user repository 335. The user repository 335 indicates the (authorized) users (such as identified by corresponding pairs of userID/password) that are authorized to read the ledgers stored in the storage node 105, either indiscriminately or selectively (such as per types of ledgers, roles of users and so on). The access manager 330 downloads data extracted from the ledgers to the clients 210.

Moving to the certification server 115, it comprises the following components. A certification manager 340 manages the certifications of operations performed on the ledgers stored in all the storage nodes 105 *(i.e.,* creation of new ledgers and appending of new blocks). The certification manager 340 interacts with the certification agents 315 of all the storage nodes 105. The certification manager 340 reads/writes a tracing repository 345. The tracing repository 345 contains tracing information relating to the ledgers being used to certify the creation/appending operations performed thereon. For example, the tracing repository 345 has an entry for each ledger. The entry stores the identifier of the ledger, the author list and the current digest of the ledger being certified by the certification server 115. The certification manager 340 uses a cryptographic engine 350. In this case as well, the cryptographic engine 350 performs cryptographic operations based on the PKI service (interacting with the PKI server). The cryptographic engine 350 reads a key repository 355. The key repository 355 stores (in a protected way) the private key of the certification server 115 and its digital certificate being issued by the PKI server.

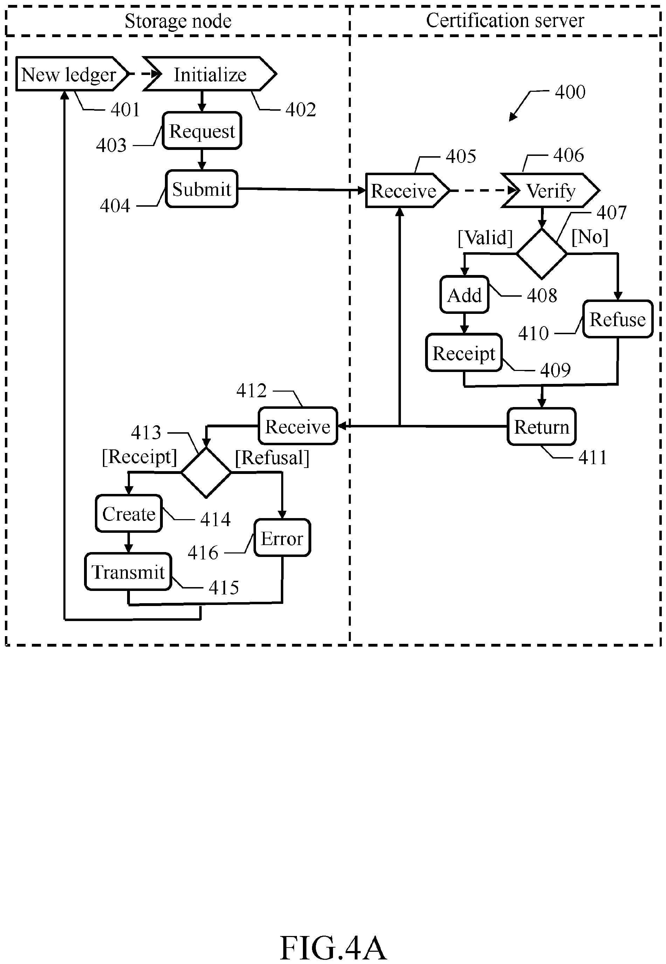

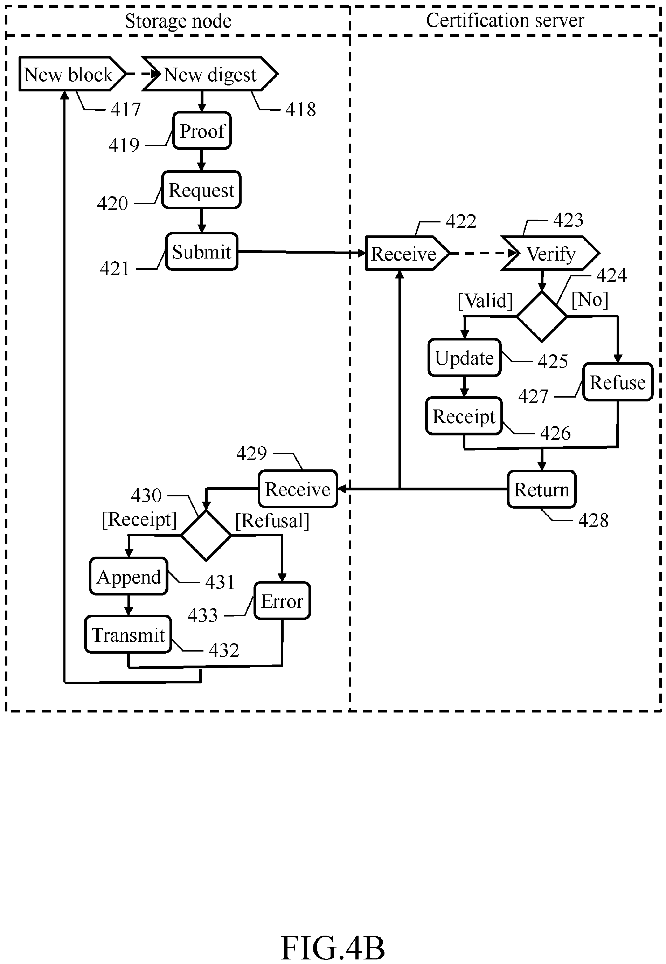

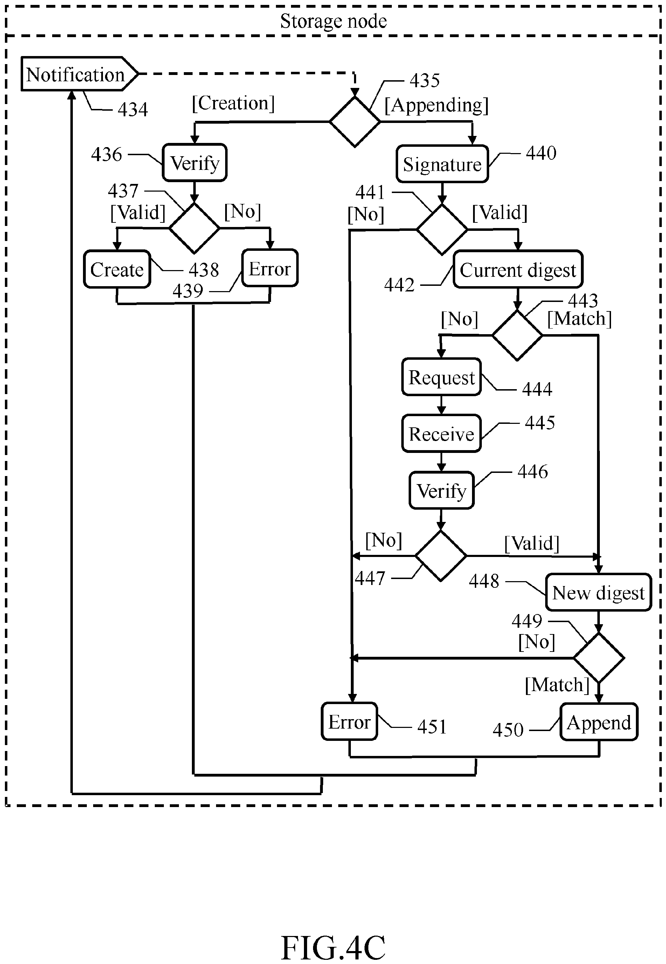

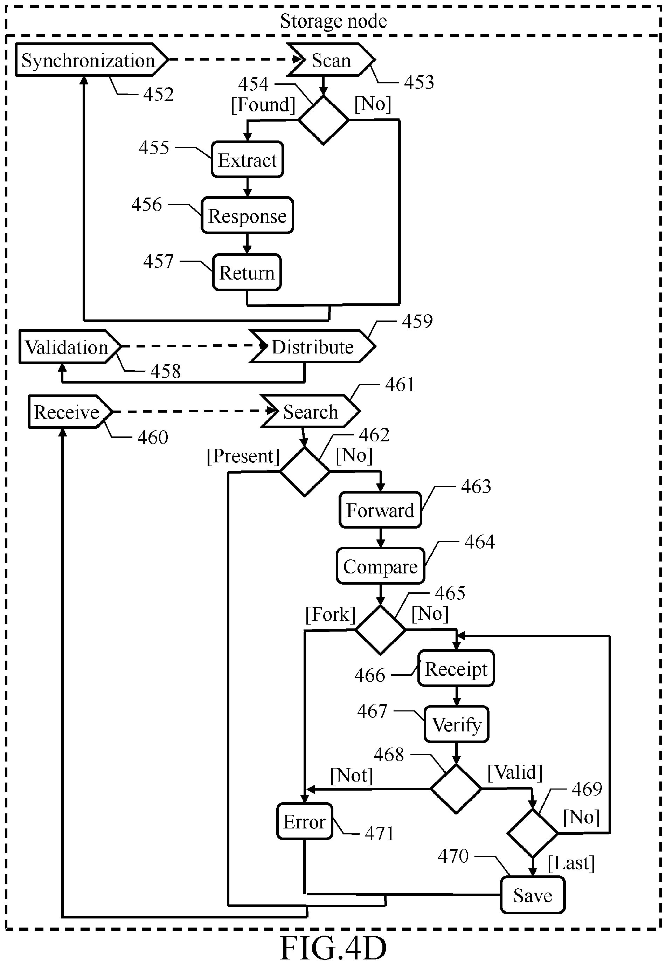

With reference now to FIG.4A-FIG.4D, an activity diagram is shown describing the flow of activities relating to an implementation of the solution according to an embodiment of the present disclosure.

Particularly, the diagram represents an exemplary process that may be used to store tamper-evident data with a process 400. In this respect, each block may correspond to one or more executable instructions for implementing the specified logical function on the relevant computing system.

The process passes from block 401 to block 402 in the swim-lane of a generic storage node as soon as a (new) ledger has to be created. For example, this happens when a (creation) command is received from a software application running on the storage node, is entered manually by an administrator of the storage node, is submitted by the client of an authorized user and so on. In response thereto, the storage manager initializes the identifier, the author list, the peer list and an initial value of the digest of the new ledger (initial digest). The identifier of the new ledger may be set to an identifier of the storage node (such as its host name) with the appending of a progressive number, to a code derived from a current time and so on. The author list and the peer list are set as indicated in the creation command (either explicitly or implicitly, such as via corresponding roles, rules as so on). The initial digest is set to a pre-defined value (for example, 0). The certification agent at block 403 generates a creation request for creating the new ledger. For this purpose, the certification agent builds a (creation) body containing the identifier of the new ledger, the author list, the peer list and the initial digest. Moreover, the certification agent generates (via the cryptographic engine) a digital signature of the body, by calculating its hash value and then encrypting it with the private key of the storage node (retrieved from the corresponding repository). The certification agent then generates the creation request by inserting the body, its digital signature and the digital certificate of the storage node (retrieved from the corresponding repository via the cryptographic engine). The certification agent at block 404 submits the creation request to the certification server.

Moving to the swim-lane of the certification server, the process passes from block 405 to block 406 as soon as the certification manager (being in a listening condition for it) receives any creation request (from the storage node at block 404 in the example at issue). In response thereto, the certification manager verifies the creation request. Particularly, the certification manager verifies that the identifier of the new ledger (extracted from the creation request) is not already used by other ledgers, *i.e.,* it is not present in the tracing repository. The certification manager also verifies (via the cryptographic engine) that the digital signature in the creation request is valid. For this purpose, the certification manager verifies that the digital certificate (extracted from the creation request) is still active, *i.e.,* it has not been revoked (for example, as indicated in a certificate revocation list published by the PKI server, not shown in the figure). Moreover, the certification manager decrypts the digital signature with the public key of the storage node (extracted from its digital certificate), calculates the hash value of the body and verifies that the decrypted/calculated values match. The flow of activity branches at block 407 according to a result of this verification. If all the above-mentioned conditions are met, the certification manager at block 408 accepts the (valid) creation request. Particularly, the certification manager adds a new entry to the tracing repository with the identifier, the author list and the current digest set to the initial digest of the new ledger (extracted from the creation request). The certification manager at block 409 generates a corresponding creation response to the creation request. The creation response is set to a creation receipt (or authorization) for the new ledger. For this purpose, the certification manager generates (via the cryptographic engine) a digital signature of the creation request, by calculating its hash value and then encrypting it with the private key of the certification server (retrieved from the corresponding repository). The certification manager then generates the creation receipt by inserting the creation request, its digital signature and the digital certificate of the certification server (retrieved from the corresponding repository via the cryptographic engine). The process instead continues to block 410 from block 407 if the identifier of the new ledger is already used and/or if the digital signature in the creation request is not valid (*i.e*., digital certificate of the storage node revoked and/or decrypted/calculated values not matching). In this case, the certification manager refuses the (non-valid) creation request. For this purpose, the certification manager generates the creation response by setting it to a refusal notice (for example, containing an indication of the reason of the refusal of the creation request). The flow of activity merges again at block 411 from block 409 or from block 410. The certification manager now returns the creation response to the storage node. The process then goes back to block 405 waiting for a next creation request.

Referring again to the swim-lane of the storage node, the certification agent at block 412 receives the creation response from the certification server (being in a listening condition for it from block 404). The flow of activity branches at block 413 according to the creation response. If the creation response is the creation receipt (creation request accepted), the storage manager at block 414 creates the new ledger. For this purpose, the storage manager adds a new entry to the ledger repository. The new entry contains a header with the identifier of the ledger, the author list and the peer list. The new entry also contains the new ledger with an (initial) record containing a null block and the creation receipt, in turn containing the initial digest. Moreover, in case the ledger is mirrored on other peer nodes (peer list not empty), the storage manager at block 415 transmits a mirroring notification to each peer node; the mirroring notification contains the initial record, in turn containing the identifier of the ledger, the author list, the peer list and the initial digest. The process instead continues to block 416 from block 413 if the creation response is the refusal notice (creation request refused). In this case, the storage manager returns an error message to the creation command (for example, containing the indication of the reason of the refusal of the creation command extracted from the refusal notice). The process then returns from block 415 or from block 416 to block 401 waiting for a next creation command.

In a completely independent way, the process passes from block 417 to block 418 as soon as a (new) block has to be added to a (local) ledger stored in the storage node (being an author node thereof). For example, this happens when an (appending) command is received from a software application running on the storage node, is entered manually by the administrator of the storage node, is submitted by a client of an authorized user and so on. In response thereto, the storage manager calculates (via the cryptographic engine) a new value of the digest (new digest) of the new version of the ledger that would be obtained by appending the new block to its current version. For example, in general the digest of the ledger is calculated as the Merkle tree hash of its blocks. For this purpose, the hash values of the blocks are arranged into a Merkle tree, which is a binary tree having its leaf nodes labelled with the hash values of the blocks, in the same order of their succession in the ledger. Each inner node of the Merkle tree is labelled with the hash value of the concatenation of the hash values of its (two) child nodes, up to the hash value of a root node of the Merkle tree that defines the digest of the ledger. For example, in case of a very simple ledger with 7 blocks *BLK₀- BLK₆* having corresponding hash values *H₀-H₆,* a hash value *H₀₁* is calculated by pairing the hash values *H₀* and *H₁,* a hash value *H₂₃* is calculated by pairing the hash values *H₂* and *H₃,* a hash value *H₄₅* is calculated by pairing the hash values *H₄* and *H₅,* a hash value *H₀₃* is calculated by pairing the hash values *H₀₁* and *H₂₃,* a hash value *H₄₆* is calculated by pairing the hash values *H₄₅* and *H₆,* and a hash value *H₀₆* is calculated by pairing the hash values *H₀₃* and *H₄₆* (which hash value *H₀₆* defines the digest of the ledger). The storage manager at block 419 determines (via the cryptographic engine) the consistency proof of the new version with respect to the current version of the ledger. For example, in this case the consistency proof is the Merkle consistency proof. The Merkle consistency proof is defined by the minimum set of hash values in the Merkle tree of the new version of the ledger that are required to verify that the new version contains the current version of the ledger without any alteration and that the new version has been obtained by extending the current version (appending the new block to the end thereof). In the above-mentioned example, a very simple consistency proof for the appending of a (single) new block *BLK₇* having corresponding hash value *H₇* is defined by a list of hash values *H₀₃,H₄₅,H₆* for verifying the containment of the current version plus the hash value *H₇* for verifying the appending of the new block. Particularly, by accumulating the corresponding list of hash values from right to left into a single hash value, *i*.*e*., calculating the hash value *H₄₆* by pairing the hash values *H₄₅* and *H₆,* and calculating the hash value *H₀₆* by pairing the hash values *H₀₃* and *H₄₆,* and then comparing the hash value *H₀₆* with the current digest it is possible to verify whether the new version contains the (unaltered) current version of the ledger. Likewise, by accumulating the corresponding list of hash values from right to left into a single hash value, *i.e.,* calculating a hash value *H₆₇* by pairing the hash values *H₆* and *H₇,* calculating a hash value *H₄₇* by pairing the hash values *H₄₅* and *H₆₇,* and calculating a hash value *H₀₇* by pairing the hash values *H₀₃* and *H₄₇,* and then comparing the hash value *H₀₇* with the new digest it is possible to verify whether the new version has been obtained by extending the current version. The certification agent at block 420 generates an appending request for appending the new block to the ledger. For this purpose, the certification agent builds an (appending) body containing the identifier of the ledger, the new digest and the consistency proof. Moreover, the certification agent generates (via the cryptographic engine) a digital signature of the body, by calculating its hash value and then encrypting it with the private key of the storage node (retrieved from the corresponding repository). The certification agent then generates the appending request by inserting the body, its digital signature and the digital certificate of the storage node (retrieved from the corresponding repository via the cryptographic engine). The certification agent at block 421 submits the appending request to the certification server.

Moving to the swim-lane of the certification server, the process passes from block 422 to block 423 as soon as the certification manager (being in a listening condition for it) receives any appending request (from the storage node at block 421 in the example at issue). In response thereto, the certification manager verifies the appending request. Particularly, the certification manager verifies that the identifier of the ledger (extracted from the appending request) exists, *i.e*., it is present in the tracing repository. The certification manager also verifies (via the cryptographic engine) that the digital signature in the appending request is valid as above *(i.e.,* digital certificate active and decrypted/calculated values matching). The certification manager also verifies that the storage node is authorized to write the ledger *(i.e.,* it is comprised in the author list of the ledger in the tracing repository). The certification manager also verifies that the consistency proof is satisfied. For this purpose, the certification manager uses the consistency proof to calculate the current digest of the ledger and verifies that it matches the one stored in the corresponding entry of the tracing repository; moreover, the certification manager uses the consistency proof to calculate the new digest of the ledger and verifies that it matches the one indicated in the appending request. The flow of activity branches at block 424 according to a result of this verification. If all the above-mentioned conditions are met, the certification manager at block 425 accepts the (valid) appending request. Therefore, the certification manager replaces the current digest of the ledger in the tracing repository with the new digest. The certification manager at block 426 generates a corresponding appending response (or authorization) for the appending request. The appending response is set to an appending receipt for the new block. For this purpose, the certification manager generates (via the cryptographic engine) a digital signature of the appending request, by calculating its hash value and then encrypting it with the private key of the certification server (retrieved from the corresponding repository). The certification manager then generates the appending receipt by inserting the appending request, its digital signature and the digital certificate of the certification server (retrieved from the corresponding repository via the cryptographic engine). The process instead continues to block 427 from block 424 if the identifier of the ledger does not exit, the digital signature in the appending request is not valid, the storage node is not comprised in the author list of the ledger and/or the consistency proof is not satisfied. In this case, the certification manager refuses the (non-valid) appending request. For this purpose, the certification manager generates the appending response by setting it to a refusal notice (for example, containing an indication of the reason of the refusal of the appending request). Particularly, this may happen in case of concurrent appending requests of a same ledger by different author nodes thereof starting from the same current version of the ledger; in this case, the first appending request that is received by the certification server is accepted, whereas the other appending requests are refused since the current digest of the ledger has been changed meanwhile and then the consistency proof is not satisfied any longer (with each refused appending request that is to be re-submitted starting from the new digest of the ledger). The flow of activity merges again at block 428 from block 426 or from block 427. The certification manager now returns the appending response to the storage node. The process then goes back to block 422 waiting for a next appending request.

Referring again to the swim-lane of the storage node, the certification agent at block 429 receives the appending response from the certification server (being in a listening condition for it from block 421). The flow of activity branches at block 430 according to the appending response. If the appending response is the appending receipt (appending request accepted), the storage manager at block 431 appends the new block to the ledger. For this purpose, the storage manager adds a new record to the ledger (in the corresponding repository). The new record contains the new block and the appending receipt, in turn containing the new digest. Moreover, in case the ledger is mirrored on other peer nodes (as indicated in the corresponding repository), the storage manager at block 432 transmits a mirroring notification to each peer node; the mirroring notification contains the new record, in turn containing the identifier of the ledger, the new digest and the consistency proof. The process instead continues to block 433 from block 430 if the appending response is the refusal notice (appending request refused). In this case, the storage manager returns an error message to the appending command (for example, containing the indication of the reason of the refusal of the appending command extracted from the refusal notice). The process then returns from block 432 or from block 433 to block 417 waiting for a next appending command.

The above-described procedure makes the creation/appending operations performed on the ledger non-repudiable; particularly, the digital signatures in the creation/appending requests make the corresponding creation/appending operations non-repudiable by the storage nodes and the digital signatures in the creation/appending receipts make the verifications (and authorizations) of the corresponding creation/appending operations non-repudiable by the certification server.

In a completely independent way, the process passes from block 434 to block 435 as soon as the storage manager (being in a listening condition for it) receives a (further) mirroring notification from any peer node. The flow of activity then branches according to a type of the mirroring notification. If the storage manager has received a mirroring notification of an initial record of a new (mirrored) ledger, the storage manager at block 436 verifies its creation receipt. Particularly, the storage manager verifies (via the cryptographic engine) that the digital signature in the creation receipt and that the digital signature in the creation request are valid as above (*i.e*., digital certificate of the certification server and of the peer node, respectively, active and decrypted/calculated values matching). The flow of activity branches at block 437 according to a result of this verification. If both the digital signatures are valid, the storage manager at block 438 accepts the (valid) creation receipt. Therefore, the storage manager creates a mirrored copy of the new ledger as above, by adding a new entry to the ledger repository containing a header (with the identifier of the ledger, the author list and the peer list) and a new ledger (with the initial record) as extracted from the creation request. The process instead continues to block 439 from block 437 if any digital signature is not valid. In this case, the storage manager enters an error condition, for example, by outputting an error message containing the indication of the reason of the refusal of the (non-valid) mirroring notification.

Referring back to block 435, if the storage manager has received a mirroring notification of a new record of a (mirrored) ledger, the storage manager at block 440 verifies that the digital signature in its appending receipt and that the digital signature in its appending request are valid as above (*i.e*., digital certificate of the certification server and of the peer node, respectively, active and decrypted/calculated values matching). The storage manager also verifies that the peer node is authorized to write the ledger *(i.e.,* it is comprised in the author list of the ledger in the corresponding repository, if any). The flow of activity branches at block 441 according to a result of this verification. If all the above-mentioned conditions are met, the storage manager at block 442 verifies that the consistency proof of the appending request is satisfied. For this purpose, at first the storage manager uses the consistency proof to calculate the current digest of the ledger and verifies that it matches the one stored in the corresponding repository, if any. The flow of activity branches at block 443 according to a result of this verification. If the two values of the current digest differ, it is possible that the (mismatched) ledger has lost its synchronization with the other (most recent) copies thereof because the storage node has not received one or more mirroring notifications containing corresponding new records (for example, in case of temporary unavailability of the storage node, network error and so on). In this case, the storage manager at block 444 submits a synchronization request to the peer nodes of the ledger (as indicated in the ledger repository). The same synchronization request is also submitted to the (only known) peer node from which the mirroring notification has been received when the ledger is new since not present in the storage node (meaning that it has been just added to the corresponding peer list). The synchronization request comprises the identifier of the ledger, a start digest equal to the current digest of the ledger stored in the corresponding repository (or a null value otherwise) and an end digest equal to the current digest of the ledger determined by the consistency proof of the appending request. The process continues to block 445 as soon as the storage manager receives a corresponding synchronization response from anyone of the peer nodes. As described in the following, the synchronization response comprises a list of one or more (missing) records of (missing) blocks that have been appended to the ledger (after the last one available in the storage node or all of them otherwise) arranged in (chronological) succession (with the addition of the author list and the peer list in case the ledger is new). The storage manager at block 446 verifies the synchronization response. Particularly, if the ledger is new the storage manager at first verifies its initial record, by verifying that the digital signature in the creation receipt and that the digital signature in the creation request are valid as above. In any case, the storage manager verifies the missing records (different from the possible initial record) along their succession. Particularly, for each missing record the storage manager verifies that the digital signature in the appending receipt is valid, that the digital signature in the appending request is valid and that the consistency proof is satisfied; for a first missing record the consistency proof is verified with respect to the current digest equal to the one stored in the storing node if any or to the initial digest comprised in the creation receipt otherwise, and for any next missing record the consistency proof is verified with respect to the current digest equal to the new digest indicated in the appending request of a previous missing record. The flow of activity branches at block 447 according to a result of this verification. If all the above-mentioned conditions are met for all the missing records of the synchronization response, the process continues to block 448; the same point is also reached from block 443 if the values of the current digest calculated from the consistency proof of the mirroring notification and stored in the ledger repository are the same. In both cases, the storage manager continues the verification of the consistency proof of the mirroring notification by using it to calculate the new digest of the ledger and verifying that it matches the one of the new version of the ledger that would be obtained by appending the possible missing blocks and the new block. The flow of activity branches at block 449 according to a result of this verification. If the two values of the new digest are the same, the storage manager at block 450 accepts the corresponding (valid) missing/new record(s). Therefore, if the ledger is new the storage manager creates it as above; in any case, for each missing/new record (along the possible succession of the synchronization response) the storage manager adds the missing/new record to the ledger (so as to append the corresponding missing/new block thereto). The process instead continues to block 451 from block 441 if any digital signature in the mirroring notification is not valid and/or the peer node is not authorized to write the ledger, from block 447 if any missing record is not valid (*i.e.*, any digital signature not valid, consistency proof not satisfied) and/or from block 449 if the two values of the new digest differ. In this case, the storage manager enters an error condition (for example, by outputting an error message containing the indication of the reason of the refusal of the mirroring notification).

The process then returns from block 438, from block 439, from block 450 or from block 451 to block 434 waiting for a next mirroring notification.

In a completely independent way, the process passes from block 452 to block 453 as soon as the storage manager (being in a listening condition for it) receives a synchronization request from any peer node. In response thereto, the storage manager verifies the synchronization request. Particularly, the storage manager verifies that the peer node is comprised in the peer list of the ledger indicated by the identifier extracted from the synchronization request. The storage manager also scans the ledger backwards (in the corresponding repository), looking for a record containing the end digest and then for a (preceding) record containing the start digest indicated in the synchronization request (if different from the null value). The flow of activity branches at block 454 according to a result of this verification. If all the above-mentioned conditions are met, the storage manager at block 455 extracts the records after the one containing the start digest (or from the beginning of the ledger if equal to the null value) up to the one containing the end digest from the ledger. The storage manager at block 456 generates a synchronization response for the synchronization request by inserting the records being extracted in their succession (with the addition of the author list and the peer list in case the start digest is equal to the null value). The storage manager at block 457 returns the synchronization response to the corresponding peer node. In this way, the synchronization response only contains the records that are actually required by the peer node (without possible further records that may have been appended to the ledger after the one to which the new block of the mirroring notification has to be appended by the peer node). The process returns from block 457 or directly from block 454 (if the peer node is not comprised in the peer list of the ledger and/or the above-mentioned search has not been successful) to block 452 waiting for a next synchronization request. In this way, no synchronization response is returned when the ledger is not up-to-date.

The above-described procedure ensures that all the mirrored copies of the ledger are consistent. Moreover, the digital signatures in the creation/appending requests by the storage nodes allow attributing corresponding authorship to every creation/appending operations performed on the ledger.

In a completely independent way, the process passes from block 458 to block 459 as soon as an event triggering a validation of the certification server occurs. For example, this may happen periodically, upon request, for every creation/appending operation and so on. In response thereto, information required to validate the certification server is disseminated throughout all the other remote (storage) nodes with a gossip protocol. For this purpose, the storage manager selects a pre-defined number of the remote nodes (such as 2-5) in a random way (such as from a public directory). The storage manager distributes corresponding validation messages for its ledgers (or a part thereof) to the selected remote nodes. Each validation message contains an identifier of the storage node (such as its host name), the identifier of the corresponding ledger and a receipt list formed by the (chronological) succession of the creation/appending receipts of the ledger (extracted from the corresponding repository). The process then returns to block 458 waiting for a next validation event.

The process instead passes from block 460 to block 461 as soon as the storage manager of the (current) storage node (being in a listening condition for it) receives a (further) validation message from a remote node. In response thereto, the storage manager searches the ledger repository for an entry relating to the (remote) ledger of the validation message and verifies whether it contains the same receipt list of the validation message. The flow of activity branches at block 462 according to a result of this search. If the result is negative, this means that the validation message has been received for the first time by the current storage node. Therefore, as above the storage manager at block 463 selects the same pre-defined number of the remote nodes (randomly) and forwards the validation message thereto. At the same time, the storage manager at block 464 compares the receipt list of the validation message with the receipt list of the ledger in the corresponding repository (if any). The flow of activity branches at block 465 according to a result of this search. If the receipt list of the validation message extends the receipt list of the ledger repository (always true when no entry for the ledger exists in the corresponding repository), a loop is entered at block 466 wherein the storage manager takes a (present) creation/appending receipt of the validation message not present in the ledger repository into account (starting from the first one possibly down to the creation receipt). The storage manager at block 467 verifies the creation/appending receipt. Particularly, the storage manager verifies that the digital signature in the creation/appending receipt and the digital signature in the creation/appending request are valid and (apart from the creation receipt) that the consistency proof of the appending receipt is satisfied with respect to its previous creation/appending receipt. The flow of activity branches at block 468 according to a result of this verification. If all the above-mentioned conditions are met, the storage manager at block 469 verifies whether a last creation/appending receipt of the validation message has been processed. If not, the flow of activity returns to block 466 to repeat the same operations on a next creation/appending receipt of the validation message. Conversely, once all the creation/appending receipts of the validation messages have been successfully verified, this means that operation of the certification server is correct. Therefore, the storage manager at block 470 saves the receipt list of the validation message into the corresponding repository (by extending its possible previous version). The process instead continues to block 471 from block 465 if the receipt list of the validation message does not extend the receipt list of the ledger repository (meaning that a fork of the ledger occurred) or from block 468 if the creation/appending receipt of the validation message is not valid (*i.e*., digital signatures not valid and/or consistency proof not satisfied). In this case, the storage manager enters an error condition. For example, a corresponding error message is provided to the administrator of the storage node warning that operation of the certification server is not correct. The error message indicates a nature of the error (fork, invalid signature, unsatisfied consistency proof). Moreover, the error message contains the corresponding creation/appending receipts; this provides a self-contained and non-repudiable proof of the error that may be verified by everybody (even without a copy of the ledger). The process then returns from block 470, from block 471 or directly from block 462 (if the same validation message has already been received) to block 460 waiting for a next validation message.

The above-described procedure allows verifying operation of the certification server in a collaborative way by the storage nodes, so as to make it generally trusted in a relatively simple way.

The same operations described above may also be performed to audit/share any ledger (either completely or limited to an initial portion thereof). Briefly (not shown in the figure), whenever the persistency of a ledger has to be audited, a succession of the creation/appending receipts of the ledger is provided by a corresponding storage node to the (auditor) client of an auditor in response to a corresponding auditing request. The auditor client verifies the creation/appending receipts in succession as above (particularly, verifying that the digital signature in each creation/appending receipt and in its creation/appending request are valid and verifying that the consistency proof of each appending receipt is satisfied). If all the above-mentioned conditions are met, the auditor client may certify that the ledger (in its version corresponding to the new digest of a last appending receipt) is consist. This result is achieved with any need of exposing the data to the auditor. Likewise, whenever the ledger has to be shared, a succession of the records of the ledger is provided by a corresponding storage node to the (user) client of an (authorized) user in response to a corresponding sharing request. The user client verifies the records in succession as above (particularly, verifying that the digital signature in the creation/appending receipt of each record and in its creation/appending request are valid and verifying that the consistency proof of each appending receipt is satisfied). If all the above-mentioned conditions are met, the user client may accept the ledger as defined by the blocks in the sharing response (being guaranteed that the ledger is consistent).

### Modifications

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may be practiced even without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. Moreover, items presented in a same group and different embodiments, examples or alternatives are not to be construed as *de facto* equivalent to each other (but they are separate and autonomous entities). In any case, each numerical value should be read as modified according to applicable tolerances; particularly, unless otherwise indicated, the terms "substantially", "about", "approximately" and the like should be understood as within 10%, preferably 5% and still more preferably 1%. Moreover, each range of numerical values should be intended as expressly specifying any possible number along the *continuum* within the range (comprising its end points). Ordinal or other qualifiers are merely used as labels to distinguish elements with the same name but do not by themselves connote any priority, precedence or order. The terms include, comprise, have, contain, involve and the like should be intended with an open, non-exhaustive meaning (*i.e*., not limited to the recited items), the terms based on, dependent on, according to, function of and the like should be intended as a non-exclusive relationship (*i.e*., with possible further variables involved), the term a/an should be intended as one or more items (unless expressly indicated otherwise), and the term means for (or any means-plus-function formulation) should be intended as any structure adapted or configured for carrying out the relevant function.

For example, an embodiment provides a method for storing tamper-evident data. However, the data may be of any type (for example, partial, different and additional data with respect to the ones mentioned above).

In an embodiment, the data are stored in one or more data structures. However, the data structures may be in any number each of any type (for example, with its data blocks arranged in the corresponding sequences via corresponding links defined by their digests, corresponding pointers and the like, via their position in files, databases and so on).

In an embodiment, the method comprises the following steps under the control of each of a plurality of storage computing systems. However, the storage computing systems may be in any number and of any type (see below).

In an embodiment, the method comprises storing (by the storage computing system) local one or more of the data structures. However, the local data structures may be in any number; in any case, the possibility is not excluded of storing the data structures in a different way (for example, in plain or cyphered form in a shared repository, in the certification computing system and so on).

In an embodiment, each of the data structures contains a persistent sequence of data blocks. However, the data structure may comprise data blocks in any number and of any type (for example, with each data block containing the whole corresponding data, only a delta with respect to a previous block, a list of two or more sub-blocks and so on).

In an embodiment, the data blocks are associated with corresponding appending receipts. However, the appending receipts may be associated with the data blocks in any way (for example, stored in same records, in same positions in different lists, accessed in a separate structure via corresponding links and so on); in any case, the possibility is not excluded of storing the appending receipts in a different way (for example, in the certification computing system wherein they are available for downloading).

In an embodiment, each of the appending receipts certifies a positive result of a verification by a certification computing system of an appending request for appending the data block to the corresponding data structure. However, the appending receipt may be of any type (for example, containing the appending request, only the new digest and the like, with or without a digital signature by the certification computing system, and so on) and resulting from any verification of the appending request (see below).

In an embodiment, the appending request comprises an indication of a new digest of a new version of the data structure with the data block appended thereto and a consistency proof for verifying without knowledge of the data block that the new version of the data structure contains a current version of the data structure with no alteration and that the new version of the data structure has been obtained by appending the data block to the current version of the data structure. However, the new digest may be indicated in any way (for example, comprised in the appending request, to be calculated from the consistency proof and so on) and the consistency proof may be of any type (for example, the Merkle consistency proof, the hash values of all the data blocks and so on); moreover, the appending request may comprise any additional information, down to none (for example, its digital signature, an inclusion proof of the data block and so on).

In an embodiment, the method comprises distributing (by the storage computing system) one or more validation messages each comprising an indication of the succession of appending receipts of at least one of the local data structures to the other storage computing systems. However, the sequence of appending receipts may be indicated in any way (for example, comprised in the validation messages, to be downloaded from the certification computing system and so on); moreover, the validation messages may comprise any additional information, down to none (for example, their digital signatures, the identifiers of the corresponding storage computing systems, their creation receipts and so on) and they may be distributed in any way (for example, in response to partial, different and additional events with respect to the ones mentioned above, for one or more selected data structures up to all of them, indirectly with a gossip protocol, directly by broadcasting them and so on).

In an embodiment, the method comprises receiving (by the storage computing system) one or more further validation messages each comprising an indication of the succession of appending receipts of at least one remote data structure of the data structures being distributed by the other storage computing systems. However, the appending receipts of the remote data structures may be distributed in any way (as above).

In an embodiment, the method comprises verifying (by the storage computing system) the certification computing system comprising verifying each of the further validation messages, said verifying each of the further validation messages comprising verifying the consistency proof of each of the appending receipts different from a first one along the corresponding succession of the further validation message, said verifying the consistency proof of the further validation message comprising verifying that the current digest of the remote data structure being calculated using the consistency proof of the further validation message matches the new digest indicated in a previous one of the appending receipts along the succession of the validation message and verifying that the new digest of the remote data structure indicated in the corresponding appending request matches the new digest of the remote data structure being calculated using the consistency proof of the validation message. However, the verification of each appending receipt may comprise any additional operations, down to none (for example, verifying its possible digital signatures, an authorization to write the remote data structure, a fork of the remote data structure, and so on).

Further embodiments provide additional advantageous features, which may however be omitted at all in a basic implementation.

In an embodiment, the method comprises generating (by the storage computing system) a new one of the appending requests for appending a new one of the data blocks to a present data structure of the local data structures. However, the new appending request may be of any type (see above).

In an embodiment, the method comprises submitting (by the storage computing system) the new appending request to the certification computing system storing corresponding current digests of current versions of the data structures. However, the appending request may be submitted in any way (for example, over an open communication channel, a protected communication channel and so on).

In an embodiment, the method comprises receiving (by the storage computing system) an indication of a new one of the appending receipts in response to the new appending request. However, the new appending receipt may be received in any way (for example, actually transmitted, made publicly available and so on by the certification computing system).

In an embodiment, the new appending receipt certifies the positive result of the verification of the new appending request by the certification computing system comprising verifying that the current digest of the present data structure being calculated using the consistency proof of the new appending request matches the current digest of the present data structure stored in the certification computing system and verifying that the new digest of the present data structure indicated in the new appending request matches the new digest of the present data structure being calculated using the consistency proof of the new appending request. However, the new appending receipt may result from any verification of the new appending request (for example, verifying the new digest by calculating it and comparing the obtained result with the value comprised in the appending request or by simply calculating it and so on, with any additional operation, such as verifying its digital signature, an authorization to write the present data structure, down to none, and so on).

In an embodiment, the method comprises appending (by the storage computing system) the new data block to the present data structure in association with the new appending receipt in response thereto. However, the new appending receipt may be associated with the new data block in any way (see above).

In an embodiment, the method comprises verifying (by the storage computing system) the certification computing system comprising verifying a consistency of the successions of appending receipts of the further validation messages of the remote data structure distributed by a plurality of the other storage computing systems. However, the further validation messages of the remote data structure may be distributed by any number of other storage computing systems and their consistency may be verified in any way (for example, detecting a fork whenever different successions are detected, when a succession differs from two or more other successions and so on).

In an embodiment, the method comprises outputting (by the storage computing system) an error message in response to a negative result of said verifying the certification computing system. However, the error message may be output in any way (for example, displayed or sent by e-mail, SMS, notification and the like to the administrator of the storage node, distributed to all the other storage nodes, made publicly available and so on) and it may have any content (for example, indicating a nature of the error, with or without the corresponding appending receipts and so on).

In an embodiment, the error message comprises an indication of corresponding one or more of the appending receipts of the further validation messages contributing to provide the negative result of said verifying the certification computing system. However, these appending receipts may be indicated in any way (for example, embedded in the error message, made accessible via a link and so on).

In an embodiment, the consistency proof is a Merkle consistency proof. However, the use is not excluded of a different consistency proof.

In an embodiment, each of the appending receipts comprises a digital signature of the corresponding appending request by the certification computing system. However, the digital signature in the appending receipt may be of any type (for example, obtained by calculating any hash value of the appending request, by encrypting the hash value or the appending request itself with any algorithm, and so on).

In an embodiment, the method comprises verifying (by the storage computing system) the certification computing system comprising verifying the digital signature in each of the appending receipts of the further validation messages. However, the digital signature in the appending receipt may be verified in any way (for example, according to a corresponding digital certificate being comprised in the appending receipt or downloaded, and so on).

In an embodiment, each of the appending requests comprises a digital signature by the storage computing system of a body comprising the new digest and the consistency proof of the present data structure. However, the digital signature in the appending request may be of any type (for example, either the same or different with respect to the one in the appending receipt).

In an embodiment, the method comprises verifying (by the storage computing system) the certification computing system comprising verifying the digital signature in each of the appending requests of the further validation messages. However, the digital signature in the appending request may be verified in any way (for example, according to a corresponding digital certificate being comprised in the appending request or downloaded, and so on).

In an embodiment, the method comprises generating (by the storage computing system) a creation request for creating a new data structure of the local data structures, the creation request comprises an indication of an initial digest of an initial version of the new data structure. However, the creation request may be of any type (for example, a dedicated request, a first appending request with the current digest equal to a null value and so on).

In an embodiment, the method comprises submitting (by the storage computing system) the creation request to the certification computing system. However, the creation request may be submitted in any way (for example, either the same or different with respect to the appending request).

In an embodiment, the method comprises receiving (by the storage computing system) an indication of a creation receipt in response to the creation request. However, the creation receipt may be received in any way (for example, either the same or different with respect to the new appending receipt).

In an embodiment, the creation receipt certifies an initialization of the current digest of the new data structure stored in the certification computing system to the initial digest indicated in the creation request. However, the creation receipt may be of any type (for example, containing the creation request, only the initial digest and the like, with or without a digital signature by the certification computing system, and so on).

In an embodiment, the method comprises creating (by the storage computing system) the new data structure in association with the creation receipt in response thereto. However, the new data structure may be created in any way (for example, with an initial record containing a null block, a dummy block providing the default initial digest and so on).

In an embodiment, the method comprises receiving (by the storage computing system) the creation receipt comprising a digital signature of the creation request by the certification computing system. However, the digital signature in the creation receipt may be of any type (for example, either the same or different with respect to the one in the appending receipts).

In an embodiment, the method comprises transmitting (by the storage computing system) a mirroring notification for the new data block of the present data structure to corresponding one or more peer computing systems of the storage computing systems. However, the peer computing systems may be in any number (down to none) and indicated in any way (for example, in a peer list, a public register and so on); moreover, the mirroring notification may be transmitted in any way (for example, over point-to-point communication channels, broadcast, in clear/encrypted form and so on).

In an embodiment, the mirroring notification comprises the new data block and the new appending receipt. However, the mirroring notification may comprise any additional information, down to none (for example, its digital signature by the storage computing system and so on).

In an embodiment, the method comprises receiving (by the storage computing system) a further mirroring notification for a further new one of the data blocks of the present data structure from one of the corresponding peer computing systems. However, the further mirroring notification may be of any type and received in any way (as the mirroring notification).

In an embodiment, the method comprises verifying (by the storage computing system) the further mirroring notification comprising verifying the corresponding consistency proof (said verifying the consistency proof of the further mirroring notification comprising verifying that the current digest of the present data structure being calculated using the consistency proof of the further mirroring notification matches the current digest of the present data structure stored in the storage computing system and verifying that the new digest of the present data structure with the further new data block matches the new digest of the present data structure indicated in the further mirroring notification). However, the verification of the further mirroring notification may comprise any additional operations, down to none (for example, verifying a possible digital signature in its appending receipt, a possible digital signature in its appending request, an authorization to write the present data structure by the peer computing system and so on); in any case, the possibility is not excluded of simply verifying that the new digest of the present data structure with the further new data block appended thereto matches the new digest indicated in the further mirroring notification.

In an embodiment, the method comprises appending (by the storage computing system) the further new data block to the present data structure in association with the corresponding appending receipt in response to a positive result of said verifying the further mirroring notification. However, the further new data block and the corresponding appending receipt may be associated in any way (as above).

In an embodiment, the method comprises the following operations in response to a mismatch between the current digest of the present data structure being calculated using the consistency proof of the mirroring notification and the current digest of the present data structure stored in the storage computing system. However, the possibility is not excluded of verifying the current digest at any other time in addition to upon receiving the mirroring notification (for example, before submitting every appending request, after the refusal of any appending request or in response to any re-start of the storage computing system with respect to the value stored in the certification computing system, and so on).

In an embodiment, in response to the mismatch the method comprises submitting (by the storage computing system) a synchronization request to the peer computing systems of the present data structure. However, the synchronization request may be submitted in any way (for example, transmitted over point-to-point communication channels, broadcast and so on).

In an embodiment, the synchronization request comprises the current digest of the present data structure stored in the storage computing system. However, the synchronization request may comprise any additional information, down to none (for example, its digital signature, the expected value of the current digest of the present data structure as determined by the mirroring notification or received from the certification computing system, and so on).

In an embodiment, in response to the mismatch the method comprises receiving (by the storage computing system) a synchronization response to the synchronization request from at least one of the peer computing systems of the present data structure. However, the synchronization response may be received in any way (for example, considering only the first one, waiting for multiple ones, up to all, and considering the most up-to-date one, and so on).

In an embodiment, the synchronization response comprises a succession of one or more synchronization records each comprising a missing one of the data blocks being missing in the present data structure stored in the storage computing system and the corresponding appending receipt. However, the synchronization response may comprise any number of synchronization records (up to start from a first one with the creation receipt), each comprising any additional information, down to none (for example, its digital signature by the peer computing system, and so on).

In an embodiment, in response to the mismatch the method comprises verifying (by the storage computing system) the synchronization response comprising verifying the synchronization records along the succession of the synchronization response each comprising verifying the corresponding consistency proof, said verifying the consistency proof of the synchronization record comprising verifying that the current digest of the present data structure being calculated using the consistency proof of the synchronization record matches the current digest of the present data structure stored in the storage computing system if the synchronization record is a first one along the succession of the synchronization response or matches the new digest indicated in a previous one of the records along the succession of the synchronization response otherwise and verifying that the new digest of the present data structure indicated in the corresponding appending request matches the new digest of the present data structure being calculated using the consistency proof of the synchronization record. However, the new digest may be verified in any way (see above) and the verification of the synchronization response may comprise any additional operations, down to none (for example, verifying a possible digital signature in its appending receipt, a possible digital signature in its appending request, an authorization to write the present data structure and so on); in any case, the possibility is not excluded of simply verifying the new digests, only the new digest of a last synchronization record and so on.

In an embodiment, in response to the mismatch the method comprises appending (by the storage computing system) the missing data blocks along the succession of the synchronization response to the present data structure in association with the corresponding appending receipts in response to a positive result of said verifying the synchronization response. However, the missing data blocks and the corresponding appending receipts may be associated in any way (as above).

Generally, similar considerations apply if the same solution is implemented with an equivalent method (by using similar steps with the same functions of more steps or portions thereof, removing some non-essential steps or adding further optional steps); moreover, the steps may be performed in a different order, concurrently or in an interleaved way (at least in part).

An embodiment provides a computer program configured for causing a storage computing system to perform the method of above when the computer program is executed on the storage computing system. However, the (software) program may be of any type (for example, implemented as a stand-alone module, as a plug-in for a pre-existing software program, such as a storage manager, directly in the latter and so on) and it may be used on any storage computing system (see below). It would be readily apparent that it is also possible to deploy the same solution as a service that is accessed through a network (such as in the Internet).

Generally, similar considerations apply if the program is structured in a different way, or if additional modules or functions are provided; likewise, the memory structures may be of other types, or may be replaced with equivalent entities (not necessarily consisting of physical storage media). The program may take any form suitable to be used by any computing system, thereby configuring the computing system to perform the desired operations; particularly, the program may be in the form of external or resident software, firmware, or microcode (either in object code or in source code), for example, to be compiled or interpreted. Moreover, it is possible to provide the program on any computer readable storage medium. The storage medium is any tangible medium (different from transitory signals per se) that may retain and store instructions for use by the computing system. For example, the storage medium may be of the electronic, magnetic, optical, electromagnetic, infrared, or semiconductor type; examples of such storage medium are fixed disks (where the program may be pre-loaded), removable disks, memory keys (for example, USB), and the like. The program may be downloaded to the computing system from the storage medium or via a network (for example, the Internet, a wide area network and/or a local area network comprising transmission cables, optical fibers, wireless connections, network devices); one or more network adapters in the computing system receive the program from the network and forward it for storage into one or more storage devices of the computing system. In any case, the solution according to an embodiment of the present disclosure lends itself to be implemented even with a hardware structure (for example, by electronic circuits integrated on one or more chips of semiconductor material), or with a combination of software and hardware suitably programmed or otherwise configured.

An embodiment provides a storage computing system comprising means configured for performing the steps of the method of above. However, the storage computing system may be of any type (for example, implemented by a physical machine, a virtual machine, a cloud service and so on).

An embodiment provides a computing infrastructure comprising a plurality of these storage computing systems. However, the computing infrastructure may comprise any number of storage computing systems.

Generally, similar considerations apply if the storage computing system and the computing infrastructure each has a different structure, comprises equivalent components or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

## Claims

1. A method (400) for storing tamper-evident data in one or more data structures, wherein the method (400) comprises, under the control of each of a plurality of storage computing systems (105):
storing (414,431,438,450), by the storage computing system (105), local one or more of the data structures each containing a persistent sequence of data blocks being associated with corresponding appending receipts, each of the appending receipts certifying a positive result of a verification by a certification computing system (115) of an appending request for appending the data block to the corresponding data structure, the appending request comprising an indication of a new digest of a new version of the data structure with the data block appended thereto and a consistency proof for verifying without knowledge of the data block that the new version of the data structure contains a current version of the data structure with no alteration and that the new version of the data structure has been obtained by appending the data block to the current version of the data structure,
distributing (458-459), by the storage computing system (105), one or more validation messages each comprising an indication of the succession of appending receipts of at least one of the local data structures to the other storage computing systems (105),
receiving (460), by the storage computing system (105), one or more further validation messages each comprising an indication of the succession of appending receipts of at least one remote data structure of the data structures being distributed by the other storage computing systems (105),
verifying (464-469), by the storage computing system (105), the certification computing system (115) comprising verifying each of the further validation messages, said verifying each of the further validation messages comprising verifying the consistency proof of each of the appending receipts different from a first one along the corresponding succession of the further validation message, said verifying the consistency proof of the further validation message comprising verifying that the current digest of the remote data structure being calculated using the consistency proof of the further validation message matches the new digest indicated in a previous one of the appending receipts along the succession of the validation message and verifying that the new digest of the remote data structure indicated in the corresponding appending request matches the new digest of the remote data structure being calculated using the consistency proof of the validation message.

2. The method (400) according to claim 1, wherein the method (400) comprises:
generating (417-420), by the storage computing system (105), a new one of the appending requests for appending a new one of the data blocks to a present data structure of the local data structures,
submitting (421), by the storage computing system (105), the new appending request to the certification computing system (115) storing corresponding current digests of current versions of the data structures,
receiving (429), by the storage computing system (105), an indication of a new one of the appending receipts in response to the new appending request, the new appending receipt certifying the positive result of the verification of the new appending request by the certification computing system (115) comprising verifying that the current digest of the present data structure being calculated using the consistency proof of the new appending request matches the current digest of the present data structure stored in the certification computing system (115) and verifying that the new digest of the present data structure indicated in the new appending request matches the new digest of the present data structure being calculated using the consistency proof of the new appending request, and
appending (430-431), by the storage computing system (105), the new data block to the present data structure in association with the new appending receipt in response thereto.

3. The method (400) according to claim 1 or 2, wherein the method comprises:
verifying (464-465), by the storage computing system (105), the certification computing system (115) comprising verifying a consistency of the successions of appending receipts of the further validation messages of the remote data structure distributed by a plurality of the other storage computing systems (105).

4. The method (400) according to any claim from 1 to 3, wherein the method comprises:
outputting (471), by the storage computing system, an error message in response to a negative result of said verifying (464-469) the certification computing system (115), the error message comprising an indication of corresponding one or more of the appending receipts of the further validation messages contributing to provide the negative result of said verifying (464-469) the certification computing system (115).

5. The method (400) according to any claim from 1 to 4, wherein the consistency proof is a Merkle consistency proof.

6. The method (400) according to any claim from 1 to 5, wherein each of the appending receipt comprises a digital signature of the corresponding appending request by the certification computing system (115), the method (400) comprising:
verifying (467), by the storage computing system (105), the certification computing system (115) comprising verifying the digital signature in each of the appending receipts of the further validation messages.

7. The method (400) according to any claim from 1 to 6, wherein each of the appending requests comprises a digital signature by the storage computing system (105) of a body comprising the new digest and the consistency proof of the present data structure, the method (400) comprising:
verifying (467), by the storage computing system (105), the certification computing system (115) comprising verifying the digital signature in each of the appending requests of the further validation messages.

8. The method (400) according to any claim from 1 to 7, wherein the method comprises:
generating (401-403), by the storage computing system (105), a creation request for creating a new data structure of the local data structures, the creation request comprising an indication of an initial digest of an initial version of the new data structure,
submitting (404), by the storage computing system (105), the creation request to the certification computing system (115),
receiving (412), by the storage computing system (105), an indication of a creation receipt in response to the creation request, the creation receipt certifying an initialization of the current digest of the new data structure stored in the certification computing system (115) to the initial digest indicated in the creation request, and
creating (413-414), by the storage computing system (105), the new data structure in association with the creation receipt in response thereto.

9. The method (400) according to claim 8, wherein the method comprises:
receiving (412), by the storage computing system (105), the creation receipt comprising a digital signature of the creation request by the certification computing system (115).

10. The method (400) according to any claim from 1 to 9 wherein the method comprises:
transmitting (432), by the storage computing system (105), a mirroring notification for the new data block of the present data structure to corresponding one or more peer computing systems (105) of the storage computing systems (105), the mirroring notification comprising the new data block and the new appending receipt,
receiving (434), by the storage computing system (105), a further mirroring notification for a further new one of the data blocks of the present data structure from one of the corresponding peer computing systems (105),
verifying (440-449), by the storage computing system (105), the further mirroring notification comprising verifying the corresponding consistency proof, said verifying the consistency proof of the further mirroring notification comprising verifying that the current digest of the present data structure being calculated using the consistency proof of the further mirroring notification matches the current digest of the present data structure stored in the storage computing system (105) and verifying that the new digest of the present data structure with the further new data block matches the new digest of the present data structure indicated in the further mirroring notification, and
appending (450), by the storage computing system (105), the further new data block to the present data structure in association with the corresponding appending receipt in response to a positive result of said verifying the further mirroring notification.

11. The method (400) according to claim 10, wherein the method comprises, in response (442-443) to a mismatch between the current digest of the present data structure being calculated using the consistency proof of the mirroring notification and the current digest of the present data structure stored in the storage computing system:
submitting (444), by the storage computing system (105), a synchronization request to the peer computing systems (105) of the present data structure, the synchronization request comprising the current digest of the present structure stored in the storage computing system (105),
receiving (445), by the storage computing system (105), a synchronization response to the synchronization request from at least one of the peer computing systems (105) of the present data structure, the synchronization response comprising a succession of one or more synchronization records each comprising a missing one of the data blocks being missing in the present data structure stored in the storage computing system (105) and the corresponding appending receipt,
verifying (446), by the storage computing system (105), the synchronization response comprising verifying the synchronization records along the succession of the synchronization response each comprising verifying the corresponding consistency proof, said verifying the consistency proof of the synchronization record comprising verifying that the current digest of the present data structure being calculated using the consistency proof of the synchronization record matches the current digest of the present data structure stored in the storage computing system (105) if the synchronization record is a first one along the succession of the synchronization response or matches the new digest indicated in a previous one of the synchronization records along the succession of the synchronization response otherwise and verifying that the new digest of the present data structure indicated in the corresponding appending request matches the new digest of the present data structure being calculated using the consistency proof of the synchronization record, and
appending (449-450), by the storage computing system (105), the missing data blocks along the succession of the synchronization response to the present data structure in association with the corresponding appending receipts in response to a positive result of said verifying (446) the synchronization response.

12. A computer program (305-335) configured for causing a storage computing system (105) to perform the method (400) according to any claim from 1 to 11 when the computer program (305-335) is executed on the storage computing system (115;105;100).

13. A storage computing system (105) comprising means (305-355) configured for performing the method (400) according to any claim from 1 to 11.

14. A computing infrastructure (200) comprising a plurality of storage computing systems (105) according to claim 13.

## Patentansprüche

1. Verfahren (400) zum Speichern von manipulationsgeschützten Daten in einer oder mehreren Datenstrukturen, wobei das Verfahren (400) umfasst, und zwar gesteuert von jedem einer Mehrzahl von Speichercomputersystemen (105):
lokales Speichern (414,431,438,450), und zwar durch das Speichercomputersystem (105), einer oder mehrerer der Datenstrukturen, die jeweils eine persistente Folge von Datenblöcken aufweisen, die mit entsprechenden Anhängebelegen in Beziehung stehen, wobei jeder der Anhängebelege ein positives Ergebnis einer Verifizierung einer Anhängeanforderung zum Anhängen des Datenblocks an die entsprechende Datenstruktur durch ein Zertifizierungsrechensystem (115) bescheinigt, wobei die Anhängeanforderung eine Angabe einer neuen Kurzversion einer neuen Version der Datenstruktur mit dem daran angehängten Datenblock und einen Konsistenznachweis aufweist, um ohne Kenntnis des Datenblocks zu verifizieren, dass die neue Version der Datenstruktur eine aktuelle Version der Datenstruktur ohne Änderung enthält und dass die neue Version der Datenstruktur durch Anhängen des Datenblocks an die aktuelle Version der Datenstruktur erhalten wurde,
Verteilen (458-459), durch das Speichercomputersystem (105), einer oder mehrerer Validierungsnachrichten, die jeweils eine Angabe der Abfolge von Anhängebelegen mindestens einer der lokalen Datenstrukturen aufweisen, an die anderen Speichercomputersysteme (105),
Empfangen (460), durch das Speichercomputersystem (105), einer oder mehrerer weiterer Validierungsnachrichten, die jeweils eine Angabe der Abfolge von Anhängebelegen von mindestens einer entfernten Datenstruktur der Datenstrukturen, die von den anderen Speichercomputersystemen (105) verteilt werden, aufweisen,
Verifizieren (464-469) des Zertifizierungsrechensystems (115) durch das Speichercomputersystem (105), umfassend, dass jede der weiteren Validierungsnachrichten verifiziert wird, wobei das Verifizieren jeder der weiteren Validierungsnachrichten umfasst, dass der Konsistenznachweis jedes der Anhängebelege, der sich von einem ersten in der entsprechenden Abfolge der weiteren Validierungsnachricht unterscheidet, verifiziert wird, wobei das Verifizieren des Konsistenznachweises der weiteren Validierungsnachricht umfasst, dass verifiziert wird, dass die aktuelle Kurzversion der entfernten Datenstruktur, die unter Verwendung des Konsistenznachweises der weiteren Validierungsnachricht berechnet wird, zu der neuen Kurzversion, die in einem vorherigen der Anhängebelege entlang der Abfolge der Validierungsnachricht angegeben ist, passt, und dass verifiziert wird, dass die neue Kurzversion der entfernten Datenstruktur, die in der entsprechenden Anhängeanforderung angegeben ist, zu der neuen Kurzversion der entfernten Datenstruktur, die unter Verwendung des Konsistenznachweises der Validierungsnachricht berechnet wird, passt.

2. Verfahren (400) nach Anspruch 1, wobei das Verfahren (400) umfasst:
Erstellen (417-420), durch das Speichercomputersystem (105), einer neuen der Anhängeanforderungen zum Anhängen eines neuen der Datenblöcke an eine gegenwärtige Datenstruktur der lokalen Datenstrukturen,
Übermitteln (421) der neuen Anhängeanforderung durch das Speichercomputersystem (105) an das Zertifizierungsrechensystem (115), das entsprechende aktuelle Kurzversionen von aktuellen Versionen der Datenstrukturen speichert,
Empfangen (429), durch das Speichercomputersystem (105), einer Angabe eines neuen der Anhängebelege ansprechend auf die neue Anhängeanforderung, wobei der neue Anhängebeleg das positive Ergebnis der Verifikation der neuen Anhängeanforderung durch das Zertifizierungsrechensystem (115) bescheinigt, umfassend, dass verifiziert wird, dass die aktuelle Kurzversion der gegenwärtigen Datenstruktur, die unter Verwendung des Konsistenznachweises der neuen Anhängeanforderung berechnet wird, zu der aktuellen Kurzversion der gegenwärtigen Datenstruktur, die in dem Zertifizierungsrechensystem (115) gespeichert ist, passt, und dass verifiziert wird, dass die neue Kurzversion der gegenwärtigen Datenstruktur, die in der neuen Anhängeanforderung angegeben ist, zu der neuen Kurzversion der gegenwärtigen Datenstruktur, die unter Verwendung des Konsistenznachweises der neuen Anhängeanforderung berechnet wird, passt, und
Anhängen (430-431), durch das Speichercomputersystem (105), des neuen Datenblocks an die gegenwärtige Datenstruktur, und zwar in Beziehung stehend mit dem neuen Anhängebeleg als Antwort darauf.

3. Verfahren (400) nach Anspruch 1 oder 2, wobei das Verfahren umfasst:
Verifizieren (464-465) des Zertifizierungsrechensystems (115) durch das Speichercomputersystem (105), umfassend, dass verifiziert wird, ob die Abfolgen der Anhängebelege der weiteren Validierungsnachrichten der entfernten Datenstruktur, die von einer Mehrzahl der anderen Speichercomputersysteme (105) verteilt werden, konsistent sind.

4. Verfahren (400) nach einem der Ansprüche 1 bis 3, wobei das Verfahren umfasst:
Ausgeben (471) einer Fehlermeldung durch das Speichercomputersystem, und zwar ansprechend auf ein negatives Ergebnis der Verifizierung (464-469) des Zertifizierungsrechensystems (115), wobei die Fehlermeldung eine Angabe eines oder mehrerer entsprechender Anhängebelege der weiteren Validierungsnachrichten aufweist, die dazu beitragen, das negative Ergebnis der Verifizierung (464-469) des Zertifizierungsrechensystems (115) bereitzustellen.

5. Verfahren (400) nach einem der Ansprüche 1 bis 4, wobei der Konsistenznachweis ein Merkle-Konsistenznachweis ist.

6. Verfahren (400) nach einem der Ansprüche 1 bis 5, wobei jeder der Anhängebelege eine digitale Signatur der entsprechenden Anhängeanforderung durch das Zertifizierungsrechensystem (115) aufweist, wobei das Verfahren (400) umfasst:
Verifizieren (467) des Zertifizierungsrechensystems (115) durch das Speichercomputersystem (105), umfassend, dass die digitale Signatur in jedem der Anhängebelege der weiteren Validierungsnachrichten verifiziert wird.

7. Verfahren (400) nach einem der Ansprüche 1 bis 6, wobei jede der Anhängeanforderungen eine digitale Signatur des Speichercomputersystems (105) eines Körpers aufweist, der die neue Kurzversion und den Konsistenznachweis der gegenwärtigen Datenstruktur aufweist, wobei das Verfahren (400) umfasst:
Verifizieren (467) des Zertifizierungsrechensystems (115) durch das Speichercomputersystem (105), umfassend, dass die digitale Signatur in jeder der Anhängeanforderungen der weiteren Validierungsnachrichten verifiziert wird.

8. Verfahren (400) nach einem der Ansprüche 1 bis 7, wobei das Verfahren umfasst:
Erstellen (401-403), durch das Speichercomputersystem (105), einer Erstellungsanforderung zum Erstellen einer neuen Datenstruktur der lokalen Datenstrukturen, wobei die Erstellungsanforderung eine Angabe einer anfänglichen Kurzversion einer anfänglichen Version der neuen Datenstruktur aufweist,
Übermitteln (404) der Erstellungsanforderung durch das Speichercomputersystem (105) an das Zertifizierungsrechensystem (115),
Empfangen (412), durch das Speichercomputersystem (105), einer Angabe eines Erstellungsbelegs ansprechend auf die Erstellungsanforderung, wobei der Erstellungsbeleg eine Initialisierung der aktuellen Kurzversion der neuen Datenstruktur, die in dem Zertifizierungsrechensystem (115) gespeichert ist, auf die in der Erstellungsanforderung angegebene ursprüngliche Kurzversion bescheinigt, und
Erstellen (413-414), durch das Speichercomputersystem (105), der neuen Datenstruktur in Beziehung stehend mit dem Erstellungsbeleg als Antwort darauf.

9. Verfahren (400) nach Anspruch 8, wobei das Verfahren umfasst:
Empfangen (412), durch das Speichercomputersystem (105), des Erstellungsbeleges, der eine digitale Signatur der Erstellungsanforderung durch das Zertifizierungsrechensystem (115) aufweist.

10. Verfahren (400) nach einem der Ansprüche 1 bis 9, wobei das Verfahren umfasst:
Übertragen (432), durch das Speichercomputersystem (105), einer Spiegelungsmeldung für den neuen Datenblock der gegenwärtigen Datenstruktur an ein oder mehrere entsprechende Partner-Computersysteme (105) der Speichercomputersysteme (105), wobei die Spiegelungsmeldung den neuen Datenblock und den neuen Anhängebeleg aufweist,
Empfangen (434), durch das Speichercomputersystem (105), einer weiteren Spiegelungsmeldung für einen weiteren neuen der Datenblöcke der gegenwärtigen Datenstruktur von einem der entsprechenden Partner-Computersysteme (105),
Verifizieren (440-449) der weiteren Spiegelungsmeldung durch das Speichercomputersystem (105), umfassend ein Verifizieren des entsprechenden Konsistenznachweises, wobei das Verifizieren des Konsistenznachweises der weiteren Spiegelungsmeldung umfasst, dass die aktuelle Kurzversion der gegenwärtigen Datenstruktur, die unter Verwendung des Konsistenznachweises der weiteren Spiegelungsmeldung berechnet wird, zu der aktuellen Kurzversion der gegenwärtigen Datenstruktur, die in dem Speichercomputersystem (105) gespeichert ist, passt, und dass verifiziert wird, dass die neue Kurzversion der gegenwärtigen Datenstruktur mit dem weiteren neuen Datenblock zu der in der weiteren Spiegelungsmeldung angegebenen neuen Kurzversion der gegenwärtigen Datenstruktur passt, und
Anhängen (450) des weiteren neuen Datenblocks durch das Speichercomputersystem (105) an die gegenwärtige Datenstruktur in Beziehung mit dem entsprechenden Anhängebeleg, und zwar ansprechend auf ein positives Ergebnis der Verifizierung der weiteren Spiegelungsmeldung.

11. Verfahren (400) nach Anspruch 10, wobei das Verfahren umfasst, und zwar ansprechend (442-443) auf eine Nichtübereinstimmung zwischen der aktuellen Kurzversion der gegenwärtigen Datenstruktur, die unter Verwendung des Konsistenznachweises der Spiegelungsmeldung berechnet wird, und der aktuellen Kurzversion der gegenwärtigen Datenstruktur, die in dem Speichercomputersystem gespeichert ist:
Senden (444), durch das Speichercomputersystem (105), einer Synchronisationsanforderung an die Partner-Computersysteme (105) der gegenwärtigen Datenstruktur, wobei die Synchronisationsanforderung die aktuelle Kurzversion der gegenwärtigen Datenstruktur aufweist, die in dem Speichercomputersystem (105) gespeichert ist,
Empfangen (445), durch das Speichercomputersystem (105), einer Synchronisationsantwort auf die Synchronisationsanforderung von mindestens einem der Partner-Computersysteme (105) der gegenwärtigen Datenstruktur, wobei die Synchronisationsantwort eine Abfolge von einem oder mehreren Synchronisationsdatensätzen aufweist, die jeweils einen fehlenden der Datenblöcke aufweisen, der in der gegenwärtigen Datenstruktur, die in dem Speichercomputersystem (105) gespeichert ist, fehlt, und den entsprechenden Anhängebeleg aufweisen,
Verifizieren (446), durch das Speichercomputersystem (105), der Synchronisationsantwort, umfassend, dass die Synchronisationsdatensätze entlang der Abfolge der Synchronisationsantwort verifiziert werden, jeweils eine Verifizierung des entsprechenden Konsistenznachweises umfassend, wobei die Verifizierung des Konsistenznachweises des Synchronisationsdatensatzes umfasst, dass verifiziert wird, dass die aktuelle Kurzversion der gegenwärtigen Datenstruktur, die unter Verwendung des Konsistenznachweises des Synchronisationsdatensatzes berechnet wird, zu der aktuellen Kurzversion der gegenwärtigen Datenstruktur, die in dem Speichercomputersystem (105) gespeichert ist, passt, wenn der Synchronisationsdatensatz ein erster entlang der Abfolge der Synchronisationsantwort ist (105), oder andernfalls zu der neuen Kurzversion passt, die in einem vorhergehenden der Synchronisationsdatensätze entlang der Abfolge der Synchronisationsantwort angegeben ist, und dass verifiziert wird, dass die neue Kurzversion der gegenwärtigen Datenstruktur, die in dem entsprechenden Anhängebeleg angegeben ist, zu der neuen Kurzversion der gegenwärtigen Datenstruktur, die unter Verwendung des Konsistenznachweises des Synchronisationsdatensatzes berechnet wird, passt, und
Anhängen (449-450), durch das Speichercomputersystem (105), der fehlenden Datenblöcke entlang der Abfolge der Synchronisationsantwort an die gegenwärtige Datenstruktur in Beziehung mit den entsprechenden Anhängebelegen, und zwar ansprechend auf ein positives Ergebnis des Verifizierens (446) der Synchronisationsantwort.

12. Computerprogramm (305-335), das konfiguriert ist, um ein Speichercomputersystem (105) zu veranlassen, das Verfahren (400) nach einem der Ansprüche 1 bis 11 auszuführen, wenn das Computerprogramm (305-335) auf dem Speichercomputersystem (115; 105; 100) ausgeführt wird.

13. Speichercomputersystem (105), das Mittel (305-355) aufweist, die zum Ausführen des Verfahrens (400) nach einem der Ansprüche 1 bis 11 konfiguriert sind.

14. Computerinfrastruktur (200), die eine Mehrzahl von Speichercomputersystemen (105) gemäß Anspruch 13 aufweist.

## Revendications

1. Procédé (400) pour stocker des données à l'épreuve d'effraction dans une ou plusieurs structures de données, dans lequel le procédé (400) comprend, sous le contrôle de chacun d'une pluralité de systèmes informatiques de stockage (105):
stocker (414,431,438,450), par le système informatique de stockage (105), une ou plusieurs locales des structures de données contenant chacune une séquence persistante de blocs de données associées à des récépissés d'ajout correspondants, chacun des récépissés d'ajout certifiant un résultat positif d'une vérification par un système informatique de certification (115) d'une demande d'ajout pour ajouter le bloc de données à la structure de données correspondante, la demande d'ajout comprenant une indication d'un nouveau empreinte d'une nouvelle version de la structure de données avec le bloc de données y ajouté et une preuve de cohérence pour vérifier sans connaissance du bloc de données que la nouvelle version de la structure de données contient une version actuelle de la structure de données sans modification et que la nouvelle version de la structure de données a été obtenue en ajoutant le bloc de données à la version actuelle de la structure de données,
distribuer (458-459), par le système informatique de stockage (105), un ou plusieurs messages de validation comprenant chacun une indication de la succession de récépissés d'ajout d'au moins une des structures de données locales aux autres systèmes informatiques de stockage (105),
recevoir (460), par le système informatique de stockage (105), un ou plusieurs messages de validation ultérieurs comprenant chacun une indication de la succession de récépissés d'ajout d'au moins une structure de données distante des structures de données distribuées par les autres systèmes informatiques de stockage (105),
vérifier (464-469), par le système informatique de stockage (105), le système informatique de certification (115) comprenant vérifier chacun des messages de validation ultérieurs, ladite vérifier chacun des messages de validation ultérieurs comprenant vérifier la preuve de cohérence de chacun des récépissés d'ajout différentes d'une première le long de la succession correspondante du message de validation ultérieur, ladite vérifier la preuve de cohérence du message de validation ultérieur comprenant vérifier que le empreinte actuel de la structure de données distante calculée utilisant la preuve de cohérence du message de validation ultérieur correspond au nouveau empreinte indiqué dans une précédente des récépissés d'ajout le long de la succession du message de validation et vérifier que le nouveau empreinte de la structure de données distante indiqué dans la demande d'ajout correspondante correspond au nouveau empreinte de la structure de données distante calculée utilisant la preuve de cohérence du message de validation.

2. Procédé (400) selon la revendication 1, dans lequel le procédé (400) comprend:
générer (417-420), par le système informatique de stockage (105), une nouvelle des demandes d'ajout pour ajouter un nouveau des blocs de données à une structure de données présente des structures de données locales,
soumettre (421), par le système informatique de stockage (105), la nouvelle demande d'ajout au système informatique de certification (115) stockant empreintes actuels correspondants des versions actuelles des structures de données,
recevoir (429), par le système informatique de stockage (105), une indication d'un nouveau des récépissés d'ajout en réponse à la nouvelle demande d'ajout, le nouveau récépissé d'ajout certifiant le résultat positif de la vérification de la nouvelle demande d'ajout par le système informatique de certification (115) comprenant vérifier que le empreinte actuel de la structure de données présente calculée utilisant la preuve de cohérence de la nouvelle demande d'ajout correspond a l'empreinte actuel de la structure de données présente stockée dans le système informatique de certification (115) et vérifier que le nouveau empreinte de la structure de données présente indiqué dans la nouvelle demande d'ajout correspond au nouveau empreinte de la structure de données présente calculé utilisant la preuve de cohérence de la nouvelle demande d'ajout, et
ajouter (430-431), par le système informatique de stockage (105), le nouveau bloc de données à la structure de données présente en association avec le nouveau récépissé d'ajout en réponse à celui-ci.

3. Procédé (400) selon la revendication 1 ou 2, dans lequel le procédé comprend:
vérifier (464-465), par le système informatique de stockage (105), le système informatique de certification (115) comprenant vérifier une cohérence des successions de récépissés d'ajout des messages de validation ultérieurs de la structure de données distante distribuées par une pluralité des autres systèmes informatiques de stockage (105).

4. Procédé (400) selon l'une quelconque des revendications 1 à 3, dans lequel le procédé comprend:
délivrer (471), par le système informatique de stockage, un message d'erreur en réponse à un résultat négatif de ladite vérifier (464-469) le système informatique de certification (115), le message d'erreur comprenant une indication de un ou plusieurs correspondants des récépissés d'ajout des messages de validation ultérieurs contribuant à fournir le résultat négatif de ladite vérifier (464-469) le système informatique de certification (115).

5. Procédé (400) selon l'une quelconque des revendications 1 à 4, dans lequel la preuve de cohérence est une preuve de cohérence de Merkle.

6. Procédé (400) selon l'une quelconque des revendications 1 à 5, dans lequel chacun des récépissés d'ajout comprend une signature numérique de la demande d'ajout correspondante par le système informatique de certification (115), le procédé (400) comprenant:
vérifier (467), par le système informatique de stockage (105), le système informatique de certification (115) comprenant vérifier la signature numérique dans chacune des récépissés d'ajout des messages de validation ultérieurs.

7. Procédé (400) selon l'une quelconque des revendications 1 à 6, dans lequel chacune des demandes d'ajout comprend une signature numérique par le système informatique de stockage (105) d'un corps comprenant le nouveau empreinte et la preuve de cohérence de la structure de données présente, le procédé (400) comprenant:
vérifier (467), par le système informatique de stockage (105), le système informatique de certification (115) comprenant vérifier la signature numérique dans chacune des demandes d'ajout des messages de validation ultérieurs.

8. Procédé (400) selon l'une quelconque des revendications 1 à 7, dans lequel le procédé comprend:
générer (401-403), par le système informatique de stockage (105), une demande de création pour créer une nouvelle structure de données des structures de données locales, la demande de création comprenant une indication d'un empreinte initial d'une version initiale de la nouvelle structure de données,
soumettre (404), par le système informatique de stockage (105), la demande de création au système informatique de certification (115),
recevoir (412), par le système informatique de stockage (105), une indication d'un récépissé de création en réponse à la demande de création, le récépissé de création certifiant une initialisation de l'empreinte actuel de la nouvelle structure de données stockée dans le système informatique de certification (115) a l'empreinte initial indiqué dans la demande de création, et
créer (413-414), par le système informatique de stockage (105), la nouvelle structure de données en association avec le récépissé de création en réponse à celle-ci.

9. Procédé (400) selon la revendication 8, dans lequel le procédé comprend:
recevoir (412), par le système informatique de stockage (105), le récépissé de création comprenant une signature numérique de la demande de création par le système informatique de certification (115).

10. Procédé (400) selon l'une quelconque des revendications 1 à 9, dans lequel le procédé comprend:
transmettre (432), par le système informatique de stockage (105), une notification de miroir pour le nouveau bloc de données de la structure de données présente à un ou plusieurs systèmes informatiques pairs (105) correspondants des systèmes informatiques de stockage (105), la notification de miroir comprenant le nouveau bloc de données et le nouveau récépissé d'ajout,
recevoir (434), par le système informatique de stockage (105), une notification de miroir ultérieure pour un nouveau ultérieur des blocs de données de la structure de données présente provenant d'un des systèmes informatiques pairs correspondants (105),
vérifier (440-449), par le système informatique de stockage (105), la notification de miroir ultérieure comprenant vérifier la preuve de cohérence correspondante, ladite vérifier la preuve de cohérence de la notification de miroir ultérieure comprenant vérifier que le empreinte actuel de la structure de données présente calculée utilisant la preuve de cohérence de la notification de miroir ultérieure correspond au empreinte actuel de la structure de données présente stockée dans le système informatique de stockage (105) et vérifier que le nouveau empreinte de la structure de données présente avec le nouveau bloc de données ultérieur correspond au nouveau empreinte de la structure de données présente indiquée dans la notification de miroir ultérieure, et
ajouter (450), par le système informatique de stockage (105), le nouveau bloc de données ultérieur à la structure de données présente en association avec le récépissé d'ajout correspondant en réponse à un résultat positif de ladite vérifier la notification de miroir ultérieure.

11. Procédé (400) selon la revendication 10, dans lequel le procédé comprend, en réponse (442-443) à un décalage entre l'empreinte actuel de la structure de données présente calculée utilisant la preuve de cohérence de la notification de miroir et l'empreinte actuel de la structure de données présente stockée dans le système informatique de stockage:
soumettre (444), par le système informatique de stockage (105), une demande de synchronisation aux systèmes informatiques pairs (105) de la structure de données présente, la demande de synchronisation comprenant le empreinte actuel de la structure présente stockée dans le système informatique de stockage (105),
recevoir (445), par le système informatique de stockage (105), une réponse de synchronisation à la demande de synchronisation provenant d'au moins un des systèmes informatiques pairs (105) de la structure de données présente, la réponse de synchronisation comprenant une succession d'un ou plusieurs enregistrements de synchronisation comprenant chacun un manquant des blocs de données manquant dans la structure de données présente stockée dans le système informatique de stockage (105) et le récépissé d'ajout correspondant,
vérifier (446), par le système informatique de stockage (105), la réponse de synchronisation comprenant vérifier les enregistrements de synchronisation au long de la succession de la réponse de synchronisation comprenant chacun vérifier la preuve de cohérence correspondante, ladite vérifier la preuve de cohérence de l'enregistrement de synchronisation comprenant vérifier que le empreinte actuel de la structure de données présente, calculé utilisant la preuve de cohérence de l'enregistrement de synchronisation, correspond au empreinte actuel de la structure de données présente stockée dans le système informatique de stockage (105) si l'enregistrement de synchronisation est un premier dans la succession de la réponse de synchronisation ou correspond au nouveau empreinte indiqué dans un précédent des enregistrements de synchronisation au long de la succession de la réponse de synchronisation, et vérifier que le nouveau empreinte de la structure de données présente indiqué dans la demande d'ajout correspondante correspond au nouveau empreinte de la structure de données présente calculée utilisant la preuve de cohérence de l'enregistrement de synchronisation, et
ajouter (449-450), par le système informatique de stockage (105), les blocs de données manquants le long de la succession de la réponse de synchronisation à la structure de données présente en association avec les récépissés d'ajout correspondants en réponse à un résultat positif de ladite vérifier (446) la réponse de synchronisation.

12. Programme informatique (305-335) configuré pour amener un système informatique de stockage (105) à exécuter le procédé (400) selon l'une quelconque des revendications 1 à 11 lorsque le programme informatique (305-335) est exécuté sur le système informatique de stockage (115;105;100).

13. Système informatique de stockage (105) comprenant des moyens (305-355) configurés pour exécuter le procédé (400) selon l'une quelconque des revendications 1 à 11.

14. Infrastructure informatique (200) comprenant une pluralité de systèmes informatiques de stockage (105) selon la revendication 13.
